# EUROPÄISCHE PATENTSCHRIFT

(11) **EP 4 295 202 B1**
(45) Veröffentlichungstag und Bekanntmachung des Hinweises auf die Patenterteilung: **02.04.2025**
(21) Anmeldenummer: 22710314.0
(22) Anmeldetag: 15.02.2022
(51) Int. Cl.: G05B 19/418

(54) **VERFAHREN UND SYSTEM ZUR VERMESSUNG VON BAUTEILEN SOWIE PROGRAMM**
METHOD AND SYSTEM FOR MEASURING COMPONENTS AND PROGRAM
PROCÉDÉ ET SYSTÈME DE MESURE DE COMPOSANTS, AINSI QUE PROGRAMME

(30) Priorität: 16.02.2021 EP 21157400
(43) Veröffentlichungstag der Anmeldung: 27.12.2023
(73) Patentinhaber: Carl Zeiss Industrielle Messtechnik GmbH, 73447 Oberkochen (DE)
(72) Erfinder: HAAS, Günter, 73432 Aalen (DE); DOTSCHKAL, Florian, 73453 Abtsgmünd (DE)
(74) Vertreter: Ramrath, Lukas
(86) Internationale Anmeldenummer: PCT/EP2022/053666
(87) Internationale Veröffentlichungsnummer: WO 2022/175260

(56) Entgegenhaltungen:
- US-A1- 2005 021 272
- US-A1- 2016 349 736
- US-B1- 6 687 561

## Beschreibung

Die Erfindung betrifft ein Verfahren und ein System zur Vermessung von Bauteilen sowie ein Programm.

Bei der industriellen Fertigung von Bauteilen bzw. Werkstücken ist regelmäßig die Überwachung der Qualität der Bauteile wichtig, einerseits, um die Qualitätssicherheit zu gewährleisten, andererseits aber auch, um etwaige Fehler bei der Produktion zeitnah zu detektieren. Allerdings benötigt die Überwachung der Qualität eine gewisse Zeit und kann somit die Ausbeute der Produktion reduzieren.

Die Prüfplanung für Qualitätsprüfung umfasst die Festlegung eines oder mehrerer der folgenden Aspekte: Prüfmerkmale, Prüfablauf, Prüfhäufigkeit (Stichprobenhäufigkeit), Prüfmethode, Prüfmittel, Prüfdatenverarbeitung.

Die Prüfplanung für eine Gestaltprüfung kann insbesondere die Analyse von Prüfmerkmalen zur Ableitung von Messaufgaben für einzelne Messelemente, die insbesondere anzutastende, Formelemente sein können, umfassen. Diese Analyse kann die Auswahl von Formelementen, die für die Analyse des Prüfmerkmals benötigt werden, eine Analyse der Verknüpfung dieser Formelemente, das Ableiten von Messelementen aus diesen Formelementen und das Formulieren der Messaufgabe an den Formelementen/Messelementen umfassen. Auf Grundlage dieser Analyse kann dann eine Messablaufplanung und das Erstellen einer Antast- und einer Auswertestrategie erfolgen.

Beispielsweise kann ein Prüfmerkmal ein Durchmesser einer Bohrung im Bauteil sein, wobei das Messelement dann eine Zylinderfläche der Bohrung sein kann. Durch die Antaststrategie kann dann eine Anzahl und eine Verteilung von Messpunkten auf/an einem Messelement festgelegt werden, z.B. Messpunkte entlang einer Kreislinie entlang der Zylinderfläche.

Ist ein Prüfkriterium, insbesondere ein prüfmerkmalspezifisches Prüfkriterium, erfüllt, so kann das Bauteil die Qualitätskontrolle oder einen Teil der Qualitätskontrolle bestehen. Weicht z.B. der Durchmesser der Bohrung nicht mehr als ein vorbestimmtes Maß von einem vorbestimmten Sollwert ab, so kann das Prüfkriterium erfüllt sein. Eine Form der Qualitätskontrolle kann z.B. auf einer manuell von einem Nutzer durchgeführten Festlegung von Prüfkriterien, z.B. auf Grundlage von Erfahrungswerten des Nutzers, beruhen.

Weiter bekannt ist, dass in Abhängigkeit von gemessenen Dimensionen von Merkmalen eines Werkstücks ein Produktionsprozess angepasst wird. Dies ist beispielsweise in der WO 2019/122821 A1 offenbart, deren Lehre die Produktion und das Messen von Werkstücken oder Bauteilen betrifft.

Aus der DE 102 42 811 A1 ist ein Verfahren zur Qualitätssicherung bekannt, wobei bei einer Abweichung von gespeicherten Ist-Werten, die an Baugruppen gemessen werden, von bestimmten Soll-Werten Fehlermeldungen und/oder Warnhinweise ausgegeben werden.

Ebenfalls aus dem Stand der Technik bekannt ist die noch nicht veröffentlichte EP 19 215 250.2, die ein Verfahren zur Koordinatenmessung an einer Mehrzahl von Werkstücken und ein Koordinatenmessgerät offenbart, wobei zumindest ein instabiles Prüfmerkmal sowie zumindest ein stabiles Prüfmerkmal ermittelt oder angenommen werden und ein Vermessen einer Mehrzahl von Werkstücken erfolgt, wobei das zumindest eine instabile Prüfmerkmal häufiger vermessen wird als das zumindest eine stabile Prüfmerkmal.

Weiter bekannt ist die US 2016/349736 A1 offenbart ein metrologisches Abtastverfahren mit einem Abtastraten-Entscheidungsschema. Insbesondere offenbart ist ein messtechnisches Abtastverfahren zum Reduzieren und automatischen Einstellen einer Werkstückabtastrate.

Die US 2005/021272 A1 offenbart ein Verfahren und eine Vorrichtung zum Durchführen einer messtechnischen Zuteilung basierend auf einer Fehlererfassungsanalyse.

Die US6,687,561 B1 offenbart ein Verfahren und eine Vorrichtung zum Bestimmen eines Stichprobenplans auf der Grundlage von Defekten.

Generell stellt sich bei der Qualitätsprüfung einer Mehrzahl von Bauteilen die Frage, wie viele dieser Bauteile und welche Prüfmerkmale dieser Bauteile geprüft werden müssen, um die Qualitätsprüfung zuverlässig, gleichzeitig aber auch mit geringem Zeitbedarf, zu ermöglichen.

Es stellt sich das technische Problem, ein Verfahren und ein System sowie ein Programm zur Vermessung von Bauteilen zu schaffen, welche eine zuverlässige Qualitätsprüfung bei gleichzeitiger Reduktion der zur Qualitätsprüfung benötigten Zeit ermöglichen.

Die Lösung des technischen Problems ergibt sich durch die Gegenstände mit den Merkmalen der unabhängigen Ansprüche. Weitere vorteilhafte Ausgestaltungen der Erfindung ergeben sich aus den Unteransprüchen.

Vorgeschlagen wird ein Verfahren zur Vermessung von Bauteilen, also einer Vielzahl von Bauteilen. Durch das Verfahren kann insbesondere eine Messstrategie zur Vermessung der Bauteile bestimmt bzw. verändert und die weitere Vermessung dann gemäß der bestimmten/veränderten Messstrategie durchgeführt werden.

Die Bauteile werden von einer Produktionseinrichtung produziert. Die Produktionseinrichtung kann insbesondere eine Fertigungs- oder Bearbeitungseinrichtung sein oder umfassen. Somit kann die Produktionseinrichtung mindestens einen Herstellungs- und/oder Bearbeitungsschritt bei der Herstellung des Bauteils durchführen. Im Sinne dieser Erfindung kann ein Bauteil auch ein Werkstück sein.

Das Verfahren umfasst das Auswählen von zu vermessenden Bauteilen aus einer Vielzahl von Bauteilen. Beispielsweise kann das Auswählen aus einer oder mehreren Charge(n) von Bauteilen erfolgen, wobei eine Charge eine vorbestimmte Vielzahl von Bauteilen umfasst, die z.B. unter denselben Produktionsbedingungen produziert wurden. Allerdings kann die Auswahl auch aus einer Vielzahl von in einer Serienfertigung produzierten Bauteilen erfolgen. Die Vielzahl von Bauteilen kann insbesondere mehr als 10, mehr als 50 oder mehr als 100 Bauteile umfassen.

Die Auswahl erfolgt gemäß mindestens einem Auswahlparameter. Dies kann bedeuten, dass die Auswahl durch mindestens einen Auswahlparameter charakterisiert ist. Wie nachfolgend noch näher erläutert, kann ein solcher Auswahlparameter beispielsweise eine Stichprobenhäufigkeit sein. Auch kann der Auswahlparameter eine Ordnungszahl in einer Reihenfolge von Bauteilen sein. Durch den Auswahlparameter kann festgelegt sein, wie viele Bauteile und gegebenenfalls auch welche Bauteile aus der Vielzahl von Bauteilen zu vermessen sind.

Die Vermessung der Bauteile kann zur Qualitätskontrolle/-prüfung in einem Produktionsprozess dienen. Insbesondere kann für jedes ausgewählte Bauteil geprüft werden, ob mindestens ein Qualitätskriterium erfüllt ist. Die Bauteile können hierbei jeweils mindestens ein Prüfmerkmal umfassen oder aufweisen. Weiter kann ein Bauteil entsprechend einem Prüfplan vermessen und geprüft werden, wobei basierend auf den aufgrund des Prüfplans erzeugten Messdaten die Qualitätsprüfung erfolgt. Hierbei kann mindestens ein Prüfkriterium zur Qualitätsprüfung durch den Prüfplan festgelegt sein. Ein Prüfkriterium kann ein prüfmerkmalspezifisches Prüfkriterium sein. Beispielsweise kann bei der Auswertung eines Prüfkriteriums geprüft werden, ob ein Prüfmerkmal eine Soll-Eigenschaft, z.B. eine Soll-Dimension, aufweist oder nicht mehr als ein vorbestimmtes Maß von der Soll-Eigenschaft abweicht. In diesem Fall kann das Prüfkriterium erfüllt sein.

Ein Bauteil kann die Qualitätsprüfung bestehen, wenn alle oder eine vorbestimmte Anzahl der Prüfkriterien für das Bauteil erfüllt sind, z.B. also wenn ein oder mehrere durch Vermessung bestimmte Eigenschaften nicht oder nicht mehr als ein vorbestimmtes Maß von (einer) vorbestimmten Soll-Eigenschaft(en) abweichen. Ist dies nicht der Fall, so erfüllt das Bauteil die Qualitätsprüfung nicht.

Das Verfahren kann weiter das Erzeugen von bauteilspezifischen Messdaten durch die Vermessung der ausgewählten Bauteile mit einer Koordinatenmesseinrichtung sowie das Analysieren bzw. Auswerten dieser Messdaten umfassen.

Eine Koordinatenmesseinrichtung kann hierbei mindestens einen Sensor zur Erzeugung der Messdaten umfassen. Der Sensor kann ein taktiler oder ein optischer Sensor sein oder ein weiterer Sensor sein. Entsprechende Koordinatenmesseinrichtungen und Sensoren zur Erzeugung von Messdaten bei einer Vermessung sind dem Fachmann bekannt. Hierbei kann ein (bauteilspezifischer) Prüfplan festlegen, welche Messpunkte zur Erzeugung der bauteilspezifischen Messdaten zu vermessen sind bzw. in welchen Messpunkten Messdaten erzeugt werden.

Die Auswertung der Messdaten kann erfolgen, um zu bestimmen, ob ein oder mehrere Prüfkriterien der Qualitätsprüfung für das Bauteil erfüllt sind. Auch kann die Auswertung der Messdaten durchgeführt werden, um eine bauteilspezifische Eigenschaft, beispielsweise eine Größe, insbesondere eine Dimension, eines Prüfmerkmals, zu bestimmen. Auch kann die Auswertung der Messdaten durchgeführt werden, um eine resultierende Eigenschaft für eine oder mehrere bauteilspezifische(n) Größe(n) von mehreren Bauteilen zu bestimmen. Beispielsweise kann durch die Auswertung der Messdaten eine statistische Auswertung erfolgen, wobei eine statistische Größe, z.B. ein Mittelwert oder eine Streuung einer bauteilspezifischen Eigenschaft, für mehrere Bauteile bestimmt wird. Diese bauteilspezifischen Eigenschaften, die resultierende Eigenschaft oder das Ergebnis der Auswertung der Prüfkriterien bzw. ein Ergebnis einer Qualitätsprüfung können ein Ergebnis der Auswertung sein.

Weiter kann das Anpassen des mindestens einen Auswahlparameters in Abhängigkeit des Ergebnisses der Auswertung erfolgen. Diese Anpassung kann auch als Anpassung durch eine Regelung gemäß einem kleinen oder inneren Regelkreis bezeichnet werden. Beispielsweise kann der Auswahlparameter auf einen vorbestimmten Wert gesetzt werden oder in vorbestimmter Weise verändert werden, wenn ein vorbestimmtes Ergebnis der Auswertung bestimmt wird. Hierbei kann eine ergebnisspezifische Anpassung erfolgen. Beispielsweise kann einem bestimmten Ergebnis ein vorbestimmter Wert des Auswahlparameters oder eine vorbestimmte Änderung des Auswahlparameters, beispielsweise eine Erhöhung oder eine Verringerung, zugeordnet sein.

Hierdurch ergibt sich in vorteilhafter Weise, dass die Auswahl an die Eigenschaften der produzierten Bauteile angepasst wird. Dies wiederum ermöglicht ist, den Zeitbedarf für die Qualitätsprüfung der Vielzahl von Bauteilen zu reduzieren. Wird beispielsweise festgestellt, dass die Eigenschaften aller ausgewählten oder mehrerer ausgewählter Bauteile vorbestimmten Eigenschaften entsprechen oder nicht mehr als ein vorbestimmtes Maß davon abweichen, so kann ein Auswahlparameter angepasst, z.B. die Stichprobenhäufigkeit reduziert, werden. Auch kann der Auswahlparameter angepasst werden, wenn eine resultierende Eigenschaft einem vorbestimmten Sollwert entspricht oder nicht mehr als ein vorbestimmtes Maß davon abweicht. Auch kann der Auswahlparameter angepasst werden, wenn alle ausgewählten oder mehrere ausgewählte Bauteile eine Qualitätsprüfung bestehen.

Weiter erfolgt das Bestimmen eines Produktionsparameters. Der Produktionsparameter repräsentiert eine Produktionsbedingung. Exemplarische Produktionsparameter werden nachfolgend noch näher erläutert. Weiter erfolgt das Anpassen des mindestens einen Auswahlparameters alternativ oder kumulativ in Abhängigkeit des Produktionsparameters oder einer Änderung des Produktionsparameters. Insbesondere ist es somit nicht mehr notwendig, nach einer Änderung eines Produktionsparameters jedes Bauteil auszuwählen und zur Qualitätsprüfung zu vermessen. Diese Anpassung kann auch als Anpassung durch eine Regelung gemäß einem großen oder äußeren Regelkreis bezeichnet werden.

Diese produktionsparameterbedingte Anpassung kann zeitversetzt erfolgen. Beispielsweise kann die Anpassung des Auswahlparameters zu einem Zeitpunkt erfolgen, an dem das erste Bauteil vermessen oder zur Vermessung bereitgestellt wird, welches mit dem erfindungsgemäß bestimmten Produktionsparameter produziert wurde. Mit anderen Worten ist es also möglich, dass in Abhängigkeit des Produktionsparameters oder seiner Änderung die Notwendigkeit einer Anpassung detektiert wird, wobei die Anpassung erst eine vorbestimmte Zeitdauer nach Detektion der Notwendigkeit erfolgt, also insbesondere nicht unmittelbar. Diese Zeitdauer kann beispielsweise gleich der Zeitdauer sein, die zwischen einer Beendigung der Produktion eines Bauteils, insbesondere mit dem Produktionsparameter oder veränderten Produktionsparameter, und einer nachfolgenden Vermessung durch die Koordinatenmesseinrichtung oder einer nachfolgenden Auswahl des Bauteils zur Vermessung liegt. So ist es z.B. möglich, in/während einer Produktion ein oder mehrere Bauteil(e) mit mindestens einem Produktionsparameter zu produzieren, wobei die Auswahl von zu vermessenden Bauteilen aus dieser Menge von produzierten Bauteilen gemäß dem mindestens einen Auswahlparameter, der produktionsparameterbedingt angepasst ist/wird, erst eine vorbestimmte Zeitdauer nach Beendigung dieser Produktion erfolgt, wobei das/die Bauteil(e) während der vorbestimmten Zeitdauer z.B. zwischengelagert und/oder transportiert wird/werden, z.B. von der Produktionseinrichtung zur Koordinatenmesseinrichtung. Dies ermöglicht eine räumliche Trennung von Produktionseinrichtung und Koordinatenmesseinrichtung, z.B. an verschiedenen Orten innerhalb eines Fabrikgeländes oder an verschiedenen Fabrikgeländen, wobei trotzdem die Auswahl der Bauteile zur Vermessung angepasst an die Produktionsbedingungen erfolgen kann.

Die Anpassung kann also insbesondere erfolgen, wenn mindestens ein Produktionsparameter einen bestimmten Wert annimmt oder sich um mehr als einen vorbestimmten Wert ändert. Dieser Wert bzw. das vorbestimmte Maß kann ein parameterspezifischer Wert oder ein parameterspezifisches Maß sein. Ändert sich ein Produktionsparameter nicht oder ist die Änderung eines Produktionsparameters kleiner oder gleich einem vorbestimmten Maß, so ist es möglich, dass keine Anpassung des Produktionsparameters erfolgt.

Mit anderen Worten wirkt sich also ein Produktionsparameter oder seine Änderung auf den Auswahlprozess von zu prüfenden Bauteilen aus. Beispielsweise kann also die Stichprobenhäufigkeit erhöht werden, wenn sich ein Produktionsparameter verändert, insbesondere in vorbestimmter Weise.

Ferner kann eine weitere Auswahl von zu vermessenden Bauteilen gemäß des angepassten Auswahlparameters erfolgen. Insbesondere kann die Auswahl unmittelbar nach der Anpassung des Auswahlparameters gemäß des angepassten Auswahlparameters erfolgen.

Vor der ersten Anpassung kann die Auswahl gemäß mindestens einem vorbestimmten Initial-Auswahlparameter erfolgen. Dieser kann z.B. durch einen Nutzer vorgegeben werden, z.B. auf Basis von Erfahrungswissen. Alternativ kann vor der ersten Anpassung jedes Bauteil ausgewählt werden. Hiernach kann dann die Anpassung fortlaufend, also wiederholt, erfolgen. Somit erfolgt also eine Regelung des Auswahlparameters.

Hierdurch kann sichergestellt werden, dass eine zuverlässige, gleichzeitig aber zeitlich schnelle Qualitätsprüfung für Bauteile erfolgt, die mit veränderten Produktionsbedingungen produziert wurden, wodurch insbesondere auch die Ausbeute von in einem vorbestimmten Zeitraum produzierten Bauteilen erhöht werden kann, für die die Qualitätsanforderungen als erfüllt angenommen werden können. Auch kann hierdurch die Vorgabe verändert werden, wie viele und gegebenenfalls auch welche Bauteile der Vielzahl für eine zuverlässige Qualitätsprüfung zu vermessen sind. Durch die Regelung wird ebenfalls eine dynamische Anpassung ermöglicht, die den Qualitätsprüfungsprozess schnell und zuverlässig an veränderte Produktionsbedingungen und/oder aktuelle Bauteileigenschaften anpasst.

So ist es beispielsweise möglich, bei bestimmten Änderungen von bestimmten Produktionsparametern die Stichprobenhäufigkeit zu erhöhen oder zu verringern. Ändern sich jedoch die Produktionsbedingungen nicht, so ist es möglich, die Stichprobenhäufigkeit bei dem eingestellten Wert zu belassen oder, in Abhängigkeit der Ergebnisse der Auswertung, gegebenenfalls zu verringern, was wiederum dann die Zeitdauer einer zuverlässigen Qualitätsprüfung reduziert. Mit anderen Worten ist es also vorstellbar, dass der mindestens eine Auswahlparameter derart angepasst wird, dass weniger zur vermessende Bauteile als vor der Anpassung ausgewählt werden, wenn sich, insbesondere während einer vorbestimmten Zeitdauer, ein oder mehrere, insbesondere ausgewählte, Produktionsparameter nicht oder nicht mehr als ein vorbestimmtes Maß ändern. Dies kann insbesondere durch eine Verringerung der Stichprobenhäufigkeit erfolgen. Eine solche Anpassung kann insbesondere dann erfolgen, wenn zusätzlich die Auswertung der Messdaten, die bei der Vermessung der mit diesem/diesen Produktionsparameter(n) produzierten Bauteile erzeugten wurden, ergibt, dass die Eigenschaften der vor der Anpassung ausgewählten Bauteile vorbestimmten Eigenschaften entsprechen oder nicht mehr als ein vorbestimmtes Maß davon abweichen.

In einer weiteren Ausführungsform erfolgt das Bestimmen mindestens eines Messparameters, wobei das Anpassen des mindestens einen Auswahlparameters in Abhängigkeit des Messparameters oder einer Änderung des Messparameters erfolgt. Ein Messparameter kann Messbedingungen bei der Vermessung des Bauteils repräsentieren. Ein solcher Messparameter kann beispielsweise einen verwendeten Sensor bzw. ein zur Vermessung verwendetes Prüfmittel repräsentieren. Auch kann der Messparameter eine Messtemperatur sein. Hierbei gelten die Ausführungen bezüglich der Anpassung des Auswahlparameters in Abhängigkeit des Produktionsparameters in entsprechender Weise auch für die Anpassung des Auswahlparameters in Abhängigkeit des Messparameters. So ist es beispielsweise möglich, bei bestimmten Änderungen von bestimmten Messparametern die Stichprobenhäufigkeit zu erhöhen oder zu verringern. Wird beispielsweise ein zur Vermessung eingesetzter Sensor durch einen ungenaueren Sensor ersetzt, so kann die Stichprobenhäufigkeit erhöht werden. Ändern sich jedoch die Messbedingungen nicht, so ist es möglich, die Stichprobenhäufigkeit bei dem eingestellten Wert zu belassen oder, in Abhängigkeit der Ergebnisse der Auswertung, gegebenenfalls zu verringern, was wiederum dann die Zeitdauer einer zuverlässigen Qualitätsprüfung reduziert.

In einer bevorzugten Ausführungsform erfolgt das Anpassen des mindestens einen Auswahlparameters teil- oder vollautomatisiert. Vollautomatisiert kann insbesondere bedeuten, dass die Anpassung ohne eine Nutzerinteraktion, z.B. eine Nutzereingabe, weiter beispielsweise ohne Nutzerbestätigung oder Eingabe eines Werts des Auswahlparameters, erfolgt. Insbesondere ist es möglich, dass das Anpassen des Auswahlparameters durch ein künstliches System oder durch Verfahren der künstlichen Intelligenz erfolgt.

Es ist auch vorstellbar, dass eine teilautomatisierte Anpassung des Auswahlparameters erfolgt. Hierbei kann ohne Nutzereingabe oder -interaktion ein Auswahlparameter bestimmt und einem Nutzer zur Bestätigung vorgeschlagen werden, beispielsweise mit einer geeigneten Ausgabeeinrichtung. Der Nutzer kann dann die Anpassung des Auswahlparameters veranlassen, indem er den vorgeschlagenen Auswahlparameter bestätigt, beispielsweise durch Bedienung einer geeigneten Eingabeeinrichtung.

Beispielsweise kann das Bestimmen des zur Anpassung vorgesehenen Auswahlparameters durch Auswertung einer bestimmten Zuordnung zwischen dem Ergebnis der Auswertung und/oder dem Produktionsparameter und/oder seiner Änderung und einem Auswahlparameter oder durch Auswertung einer vorbestimmten Zuordnung zwischen dem Ergebnis der Auswertung und/oder dem Produktionsparameters und/oder seiner Änderung zu einer Änderung des Auswahlparameters erfolgen.

Diese vorbestimmte(n) Zuordnung(en) kann/können, beispielsweise durch eine geeignete Auswerteeinrichtung, ausgewertet werden, die Anpassung erfolgt, indem der sich aus der Zuordnung ergebene Auswahlparameter verwendet wird oder ein aktuell eingestellter Auswahlparameter gemäß der sich aus der Zuordnung ergebenden Änderung geändert wird.

Hierdurch ergibt sich in vorteilhafter Weise eine zeitlich schnelle und zuverlässige Anpassung des Auswahlparameters, insbesondere an sich verändernde Produktionsbedingungen und/oder an Eigenschaften der Bauteile. Dies wiederum ermöglicht eine zuverlässige Qualitätsprüfung mit geringem Zeitbedarf.

In einer weiteren Ausführungsform erfolgt das Anpassen des Auswahlparameters regelbasiert. Ein regelbasiertes Anpassen kann beispielsweise erfolgen, indem vorbestimmte Regeln ausgewertet werden, insbesondere durch Verfahren der Datenverarbeitung. Hierbei kann/können das vorhergehend erläuterte Ergebnis der Auswertung und/oder ein Produktionsparameter und/oder eine Änderung eines Produktionsparameters eine Eingangsgröße für die Regel bilden. Die Ausgangsgröße der Regel kann der durch die Anpassung einzustellende mindestens eine Auswahlparameter oder seine Änderung sein.

So kann eine Regel einen Zusammenhang zwischen genau einer oder mehr als einer Eingangsgröße und genau einer oder mehr als einer Ausgangsgröße repräsentieren. Die Regel bildet somit eine Zuordnung zwischen mindestens einer Eingangsgröße und dem mindestens einen Auswahlparameter bzw. einer Änderung des mindestens einen Auswahlparameters.

Hierbei ist es möglich, dass eine Regel nutzerspezifiziert ist. Insbesondere kann eine Regel durch einen Nutzer vorgegeben werden, der hierzu beispielsweise auf Erfahrungswerte zurückgreifen kann. Die Regel kann dann z.B. durch eine entsprechende Nutzereingabe festgelegt werden. Mit anderen Worten kann Expertenwissen durch Regeln abgebildet werden.

Alternativ ist es möglich, dass eine Regel in Abhängigkeit einer Auswertung, insbesondere Interpretation, von Mess- und Produktionsdaten bestimmt wird. Insbesondere können statistische Methoden der Datenauswertung auf eine Datenmenge umfassend Mess- und Produktionsdaten angewendet werden, um Zusammenhänge zu identifizieren, insbesondere einen Zusammenhang zwischen einer Änderung einer Produktionsbedingung einer Änderung des Ergebnisses der Auswertung der Messdaten. Insbesondere können statistische Kennwerte ermittelt und zur Bestimmung der Regeln genutzt werden. Hierzu kann die Datenmenge auch das Ergebnis der Auswertung umfassen. Die statistischen Methoden können insbesondere ein Verfahren zur Verdichtung der Daten umfassen bzw. anwenden.

Eine nutzerspezifizierte oder durch Auswertung bestimmte Regel kann gespeichert werden, beispielsweise in einer Speichereinrichtung eines Systems zur Vermessung von Bauteilen. Weiter kann die insbesondere gespeicherte Regel durch eine Auswerte- und Steuereinrichtung des Systems ausgewertet werden.

Dies ermöglicht eine möglichst zuverlässige Bestimmung von Regeln, insbesondere basierend auf Zusammenhängen, die einem Nutzer nicht unmittelbar ersichtlich sind, und somit auch eine verbesserte Anpassung des Auswahlparameters an sich verändernde Produktionsbedingungen und/oder Eigenschaften der Bauteile. Mit anderen Worten wird hierdurch ermöglicht, weiteres Expertenwissen in Form dieser Regeln zu generieren.

Produktionsdaten können hierbei Daten sein, die die Produktionsbedingungen des Bauteils/der Bauteile repräsentieren. Insbesondere können Produktionsdaten ein oder mehrere Produktionsparameter umfassen bzw. codieren. Insbesondere können Data-Mining Methoden angewendet werden, um Regeln für die regelbasierte Anpassung aus bereits erzeugten Mess- und Produktionsdaten abzuleiten.

Führt z.B. eine Änderung einer Produktionsbedingung, die durch die Änderung eines Produktionsparameters repräsentiert wird, dazu, dass sich die Qualität der nach der Änderung produzierten Bauteile verschlechtert, was durch die Auswertung der Messdaten festgestellt werden kann, so kann eine Regel derart festgelegt werden, dass bei der Detektion der Änderung des Produktionsparameters die Stichprobenhäufigkeit erhöht wird. Führt z.B. eine Änderung einer Produktionsbedingung, die durch die Änderung eines Produktionsparameters repräsentiert wird, dazu, dass sich die Qualität der nach der Änderung produzierten Bauteile verbessert, beispielsweise weil ein abgenutztes Werkzeug durch ein neues Werkzeug ersetzt wird, so kann eine Regel derart festgelegt werden, dass bei der Detektion der Änderung des Produktionsparameters die Stichprobenhäufigkeit verringert wird.

Durch die Verwendung von Regeln zur Anpassung des Auswahlparameters ergibt sich in vorteilhafter Weise eine einfach implementierbare Anpassung des Auswahlparameters.

In einer weiteren Ausführungsform werden Regeln durch maschinelles Lernen bestimmt. Der Begriff maschinelles Lernen umfasst oder bezeichnet hierbei Verfahren zur Bestimmung von Regeln basierend auf Trainingsdaten. So ist es möglich, dass Regeln, insbesondere in Form eines Modells, durch Verfahren zum überwachten Lernen bestimmt werden und hierzu die Trainingsdaten, die die vorhergehend erläuterten Eingangs- und Ausgangsgrößen umfassen, verwendet werden. Hierbei können die Eingangs- und Ausgangsgrößen, die die Trainingsdaten bilden, von einem Nutzer spezifiziert werden, beispielsweise als Ein- und Ausgangsgrößen der vorhergehend erläuterten nutzerspezifizierten Regeln. Alternativ oder kumulativ können die Eingangs- und Ausgangsgrößen der vorhergehend erläuterten durch Auswertung bestimmten Regeln die Trainingsdaten oder ein Teil davon bilden.

Beispielsweise kann dieser festlegen, dass ein bestimmter Wert einer Eingangsgröße oder eine bestimmte Änderung einer Eingangsgröße zu einem bestimmten Wert der Ausgangsgröße oder einer bestimmten Änderung der Ausgangsgröße führt. Weiter kann dann das Training, also die Modellidentifikation bzw. die Identifikation einer oder mehrerer Regeln, in Abhängigkeit der derart von einem Nutzer bereitgestellten Daten erfolgen. Es ist selbstverständlich aber auch vorstellbar, dass zur Bestimmung der Regel Verfahren des unüberwachten Lernens angewendet werden.

Geeignete mathematische Algorithmen für das maschinelle Lernen umfassen: Decision Tree-basierte Verfahren, Ensemble Methods (z.B. Boosting, Random Forrest) -basierte Verfahren, Regression-basierte Verfahren, Bayes'sche Methoden (z.B. Bayesian Belief Networks)-basierte Verfahren, Kernel Methoden (z.B. Support Vector Machines)-basierte Verfahren, Instance- (z.B. k-Nearest Neighbour)-basierte Verfahren, Association Rule Learning-basierte Verfahren, Boltzmann Maschine-basierte Verfahren, Artificial Neural Networks (z.B. Perceptron) -basierte Verfahren, Deep Learning (z.B. Convolutional Neural Networks, Stacked Autoencoders) -basierte Verfahren, Dimensionality Reduction-basierte Verfahren, Regularization Methods-basierte Verfahren.

Es ist auch vorstellbar, dass Regeln mittels eines neuronalen Netzes bestimmt werden. Beispielsweise kann das neuronale Netz als Autoencoder oder als faltendes neuronales Netz (Convolutional Neural Network, CNN) oder als RNN (Recurrent Neural Network) oder als LSTM-Netz (long short-term memory network) oder als neuronales Transformer-Netz oder als eine Kombination aus mindestens zwei der erwähnten Netze ausgebildet sein. Auch ist es möglich, Verfahren der künstlichen Intelligenz zur Bestimmung der Regeln anzuwenden. Solche sind dem Fachmann bekannt.

Hierdurch ergibt sich in vorteilhafter Weise, dass eine verbesserte Anpassung der Vermessung von Bauteilen an die Produktionsbedingungen, insbesondere den zeitlichen Verlauf der Produktionsbedingungen, erfolgt, wobei gleichzeitig die bereits erwähnte Zuverlässigkeit und Genauigkeit der Qualitätsprüfung gewährleistet wird. So können durch Verfahren des maschinellen Lernens insbesondere Regeln bestimmt werden, die aus für einen Nutzer nur sehr schwer erkennbare Zusammenhängen der vorhergehend erläuterten Eingangsgrößen und Ausgangsgrößen abgeleitet werden können.

Es ist weiter möglich, dass die Regeln adaptiert werden. Dies kann bedeuten, dass die Regeln, insbesondere mindestens ein Regelparameter einer Regel, verändert werden. Beispielsweise kann das vorhergehend erläuterte Modell adaptiert werden. Die Adaption kann hierbei ebenfalls durch Verfahren des maschinellen Lernens erfolgen. Auch ist es möglich, dass die Regeln, insbesondere das vorhergehend erläuterte Modell, durch selbstadaptive Algorithmen adaptiert werden.

Hierbei ist es vorstellbar, dass Mess- und Produktionsdaten, die auch die Grundlage für die Bestimmung der Regeln dienen, ausgewertet werden, um neue Regeln zu erzeugen und/oder existierende Regeln zu verändern. Auch hierzu können Verfahren des maschinellen Lernens angewendet werden. Auch kann ein bereits trainiertes Modell mit neu bereitgestellten Trainingsdaten, z.B. in Form von Eingangs- und Ausgangsgrößen von durch Auswertung bestimmten Regeln, erneut trainiert werden, wobei die durch Auswertung bestimmten Regeln durch Auswertung von Mess- und Produktionsdaten bestimmt werden, die mit dem bisherigen, nicht adaptierten Modell erzeugt wurden.

Durch die Adaption von Regeln ergibt sich in vorteilhafter Weise eine dauerhafte, insbesondere fortwährende, Anpassung der Vermessung an den zeitlichen Verlauf der Produktionsbedingungen und/oder der Eigenschaften der produzierten Bauteile und damit einhergehend die bereits erläuterte Gewährleistung einer Zuverlässigkeit und Genauigkeit der Qualitätsprüfung.

In einer weiteren Ausführungsform ist oder repräsentiert ein Produktionsparameter eine Umgebungsbedingung. Eine Umgebungsbedingung kann insbesondere eine (Produktions-)Temperatur, ein (Produktions-)Luftdruck, eine (Produktions-)Luftfeuchtigkeit und/oder die Helligkeit sein, die die Produktion beeinflussen bzw. für die Produktion maßgeblich sind.

Weiter kann ein Produktionsparameter ein zur Produktion verwendetes Werkzeug sein oder repräsentieren. In diesem Fall kann eine Änderung des Produktionsparameters ein Werkzeugwechsel sein oder repräsentieren. Beispielsweise kann eine Stichprobenhäufigkeit verringert werden, falls ein Werkzeug durch ein wenig gebrauchteres Werkzeug ersetzt wird. Auch kann eine Stichprobenhäufigkeit erhöht werden, falls ein Werkzeug durch ein gebrauchteres Werkzeug ersetzt wird.

Weiter kann ein Produktionsparameter ein zur Produktion verwendetes Verfahren repräsentieren. So ist es vorstellbar, dass ein Bauteil durch verschiedenen Produktionsverfahren produziert werden kann. Z.B. kann eine gewünschte Oberflächenform eines (Abschnitts eines) Bauteils durch ein Fräsverfahren, ein Schleifverfahren, ein Hobelverfahren oder ein anderes Fertigungsverfahren hergestellt werden. Durch die verschiedenen Verfahren können unter Umständen verschiedene Fertigungsgüten dieser Oberflächenform erreicht werden. Beispielsweise kann eine Stichprobenhäufigkeit verringert werden, falls eine Umstellung der Produktion von einem Fertigungsverfahren auf ein Fertigungsverfahren mit im Vergleich höherer Fertigungsgüte erfolgt.

Weiter kann ein Produktionsparameter eine Anzahl der seit einem bestimmten Zeitpunkt produzierten Bauteile sein oder repräsentieren. Beispielsweise kann der Produktionsparameter die Anzahl der seit der zuletzt erfolgten Anpassung des Auswahlparameters oder die Anzahl der seit Produktionsbeginn, seit Schichtbeginn oder der seit Chargenproduktionsbeginn produzierten Bauteile sein.

Weiter kann ein Produktionsparameter eine Produktionszeitdauer seit einem bestimmten Zeitpunkt sein oder repräsentieren. Beispielsweise kann der Produktionsparameter die Produktionszeitdauer seit der zuletzt erfolgen Anpassung des Auswahlparameters oder die Zeitdauer seit Produktionsbeginn, seit Schichtbeginn oder seit Chargenproduktionsbeginn sein.

Beispielsweise ist es möglich, dass der Auswahlparameter nach der Produktion einer vorbestimmten Anzahl von Bauteilen und/oder nach Ablauf einer Produktionszeitdauer, insbesondere, aber nicht zwingend, mit konstanten oder annähernd konstanten Produktionsbedingungen, angepasst wird, beispielsweise eine Stichprobenhäufigkeit erhöht wird. Annähernd konstante Bedingungen bezeichnen hierbei Bedingungen, die nicht mehr als ein vorbestimmtes Maß von anfänglich vorliegenden Bedingungen abweichen.

Weiter kann der Produktionsparameter eine Anzahl der seit einem bestimmten Zeitpunkt produzierten Chargen sein oder repräsentieren. In diesem Fall kann der Produktionsparameter beispielsweise die Anzahl der seit der zuletzt erfolgen Anpassung produzierten Chargen oder der seit Produktionsbeginn oder der seit Schichtbeginn produzierten Chargen sein. So kann eine Anpassung, z.B. eine Erhöhung der Stichprobenhäufigkeit, erfolgen, wenn eine vorbestimmte Anzahl von Chargen des Bauteils, insbesondere, aber nicht zwingend, mit konstanten oder annähernd konstanten Produktionsbedingungen, produziert wurde. Die vorbestimmte Anzahl von Chargen kann insbesondere 1 sein.

Der Produktions-, Schicht- oder Chargenbeginn kann hierbei insbesondere der Anfangszeitpunkt der Produktion, der Schicht oder der Charge sein, in der die Bauteile, aus denen gemäß dem Auswahlparameter auszuwählen ist, produziert wurden.

Weiter ist es möglich, dass ein Produktionsparameter eine Schichtgruppe oder ein Schichtgruppenwechsel repräsentiert, beispielsweise eine Frühschicht, eine Normalschicht, eine Spätschicht, eine Nachtschicht oder eine weitere Schichtgruppe oder ein Schichtwechsel zwischen diesen, z.B. die Anzahl von erfolgten Schichtwechseln seit Produktions- oder Chargenproduktionsbeginn oder seit Schichtbeginn einer vorbestimmten Schicht sein. In diesem Fall kann sich der Produktionsparameter ändern, z.B. eine Stichprobenhäufigkeit erhöht werden, wenn ein Schichtwechsel auftritt oder mehrere Schichtwechsel auftreten. Somit kann eine Anpassung des Auswahlparameters erfolgen, wenn ein Schichtwechsel auftritt oder mehrere Schichtwechsel auftreten.

Es ist weiter möglich, dass ein Produktionsparameter auch ein während oder zur Produktion -und somit vor der Auswahl und Vermessung durch die Koordinatenmessreinrichtung - verwendetes Prüfmittel repräsentiert, wobei z.B. der Produktionsprozess in Abhängigkeit von Prüfergebnissen des Prüfmittels gesteuert oder geregelt wird.

Weiter kann ein Messparameter einen zur Vermessung verwendeten Sensor repräsentieren. Dies wurde vorhergehend erläutert.

Die angeführten Produktionsparameter ermöglichen in vorteilhafter Weise eine zuverlässige Anpassung der Vermessung an Produktionsbedingungen, deren Änderungen sich in der Regel auf die Produktionsqualität des produzierten Bauteils auswirken. So wurde beispielsweise erkannt, dass eine Veränderung, insbesondere eine Veränderung um mehr als ein vorbestimmtes Maß, einer oder mehrerer der genannten Umgebungsgrößen die Produktionsqualität verändert. Z.B. wurde erkannt, dass sich eine Zunahme der Anzahl der seit einem bestimmten Zeitpunkt produzierten Bauteile oder eine steigende Produktionszeitdauer oder einer Zunahme der Anzahl produzierter Chargen auf die Produktionsqualität auswirken kann, insbesondere aufgrund der Abnutzung des Werkzeugs. Beispielsweise ist es also möglich, bei einer Veränderung, die zu einer Verringerung der Qualität führt, eine Strichprobenhäufigkeit zu erhöhen.

Allerdings wurde auch erkannt, dass Änderungen auch eine Verbesserung der Qualität bedingen können. Wird z.B. ein genaueres und/oder weniger gebrauchtes Werkzeug verwendet, so kann sich die Produktionsqualität erhöhen. Beispielsweise ist es also möglich, bei einer Veränderung, die zu einer Erhöhung der Qualität führt, eine Strichprobenhäufigkeit zu verringern.

Ebenfalls erkannt wurde, dass sich die Schichtgruppe auf eine Produktionsqualität auswirken kann. Somit kann bei einem Schichtwechsel die Stichprobenhäufigkeit erhöht werden, um zu gewährleisten, dass eine gewünschte Qualität auch bei der Produktion in der neuen Schicht gewährleistet wird.

Hierbei können Werte von Produktionsparametern oder Änderungen von Produktionsparametern, die zu einer Verringerung der Produktionsqualität oder zu einer Erhöhung der Produktionsqualität führen, durch die vorhergehend erläuterte Auswertung der Mess- und Produktionsdaten identifiziert werden. Weiter kann einer Verringerung oder Erhöhung bzw. dem aus der Verringerung oder Erhöhung resultierenden Wert einem Auswahlparameter zugeordnet sein, beispielsweise in Form einer vorbestimmten Zuordnung. Diese Zuordnung ermöglicht es dann, den Auswahlparameter zu bestimmen, der zur Anpassung verwendet werden soll.

In einer weiter bevorzugten Ausführungsform ist der Auswahlparameter eine Stichprobenhäufigkeit. Die Stichprobenhäufigkeit kann hierbei die Anzahl der, insbesondere zur Qualitätsprüfung, vermessenen Bauteile aus einer vorbestimmten Menge von Bauteilen, beispielsweise 100, oder aus der Menge der in einer vorbestimmten Zeit produzierten Bauteile bezeichnen. Je größer die Stichprobenhäufigkeit, desto mehr Zeit- und Rechenaufwand entsteht durch die entsprechende Vermessung und Prüfung. Allerdings wird durch eine höhere Stichprobenhäufigkeit auch die Zuverlässigkeit der Qualitätsprüfung erhöht.

Die Wahl des Auswahlparameters als Stichprobenhäufigkeit ermöglicht in vorteilhafter Weise eine sehr einfach zu implementierende Anpassung der Vermessung bei Gewährleistung der gewünschten Zuverlässigkeit und Genauigkeit der Qualitätsprüfung.

In einer weiteren Ausführungsform ist der mindestens eine Auswahlparameter oder mindestens ein weiterer Auswahlparameter eine Ordnungszahl in einer Reihenfolge von produzierten Bauteilen. Die Reihenfolge kann beispielsweise die Reihenfolge der seit der letzten Anpassung des Auswahlparameters, seit Beginn der Produktion, seit Beginn der Produktion der Charge, seit Schichtbeginn oder seit einem vorbestimmten Zeitpunkt in der Vergangenheit produzierten Bauteile sein.

Es ist möglich, dass mehrere Ordnungszahlen durch mehrere Auswahlparameter festgelegt werden. Diese Ordnungszahlen können beispielsweise äquidistant zwischen dem ersten und dem letzten Bauteil der Reihenfolge, insbesondere der Vielzahl von Bauteilen, aus denen ausgewählt wird, verteilt sein. Mit anderen Worten kann z.B. jedes n-te Bauteil ausgewählt werden, wobei n = 1, 2, 3 ... sein kann. Allerdings ist es auch möglich, dass Ordnungszahlen ungleich über die Reihenfolge verteilt sind, also nicht äquidistant über die Reihenfolge zwischen dem ersten und dem letzten produzierten Bauteil. Hierdurch ist es möglich, dass in einem ersten Abschnitt einer Reihenfolge jedes k-te Bauteil ausgewählt wird, beispielsweise bis zu einer vorbestimmten Anzahl von Bauteilen der Reihenfolge. In einem folgenden Abschnitt kann dann jedes t-te Bauteil vermessen werden, wobei t von k verschieden, insbesondere größer als k, sein kann.

Dies ermöglicht z.B. in vorteilhafter Weise, dass zu Beginn einer Produktion mit veränderten Produktionsbedingungen eine häufige Vermessung und Qualitätsprüfung erfolgen kann, wodurch bereits zu Anfang die gewünschte Zuverlässigkeit und Qualität der Qualitätsprüfung sichergestellt wird. So kann es beispielsweise passieren, dass die unmittelbar nach Veränderung von Produktionsbedingungen produzierten Bauteile anfälliger für ungewünschte Qualitätsabweichungen sind als die zu einem späteren Zeitpunkt produzierten Bauteile, beispielsweise aufgrund von Einschwingvorgängen in der entsprechenden Produktionseinrichtung.

In einer weiteren Ausführungsform erfolgt die Auswahl von zu vermessenden Bauteilen aus einer Charge von Bauteilen. Hierbei kann die Stichprobenhäufigkeit z.B. auf die Anzahl der Bauteile einer Charge bezogen sein. Weiter erfolgt die Auswahl von zu vermessenden Bauteilen gemäß dem angepassten Auswahlparameter aus einer weiteren Charge von Bauteilen, beispielsweise einer zu einem späteren Zeitpunkt produzierten Charge. Hierdurch ergibt sich also eine chargenspezifische Auswahl von Bauteilen und Auswertung der entsprechenden Messdaten. Somit erfolgt also eine chargenspezifische Anpassung des Auswahlparameters. Dies stellt in vorteilhafter Weise einen guten Kompromiss zwischen der Häufigkeit der Anpassung und der gewünschten Zuverlässigkeit und Genauigkeit der Qualitätsprüfung dar, insbesondere da davon ausgegangen werden kann, dass Bauteil der gleichen Charge unter annähernd gleichen Produktionsbedingungen produziert wurden.

Es ist selbstverständlich aber auch möglich, dass die Auswahl von zu vermessenden Bauteilen aus einer (ersten) Teilmenge von in einer Serienfertigung produzierten Bauteilen erfolgt, wobei dann gegebenenfalls eine Anpassung des Auswahlparameters erfolgt, wobei dann die Auswahl von zu vermessenden Bauteilen gemäß dem angepassten Auswahlparameter aus einer weiteren Teilmenge von Bauteilen dieser Serienfertigung erfolgt, wobei die Bauteile der weiteren Teilmenge später produziert wurden als die Bauteile der ersten Teilmenge. Hierdurch ergibt sich eine kontinuierliche bzw. quasi-kontinuierliche Anpassung der Vermessung und somit auch der Qualitätsprüfung.

In einer weiteren Ausführungsform wird durch das Auswerten für mehrere, insbesondere vorbestimmte, aber nicht alle, oder jedes Bauteil der ausgewählten Bauteile mindestens eine Qualitätsmaß bestimmt, wobei das Anpassen des mindestens einen Auswahlparameters in Abhängigkeit des Qualitätsmaß oder einer Änderung des Qualitätsmaßes erfolgt. Das Qualitätsmaß kann hierbei die Qualität eines oder mehrere Bauteile repräsentieren. Beispielsweise kann als Qualitätsmaß das Verhältnis zwischen der Anzahl der ausgewählten Bauteile, die eine Qualitätsprüfung bestanden haben, und der Gesamtzahl der ausgewählten Bauteile bestimmt werden.

Insbesondere kann die Anpassung des Auswahlparameters dann derart erfolgen, dass durch die Vermessung der entsprechend des angepassten Auswahlparameters ausgewählten Bauteile und die auf dieser Vermessung basierende Qualitätsprüfung eine zuverlässige Qualitätsprüfung für die Vielzahl von Bauteilen sichergestellt ist.

Wird z.B. detektiert, dass eine Qualität, z.B. also eine durch das Qualitätsmaß repräsentierte Qualität, in einem vorbestimmten Zeitraum um mehr als ein vorbestimmtes Maß abgenommen hat, so kann die Stichprobenhäufigkeit erhöht werden. Wird z.B. detektiert, dass eine Qualität in einem vorbestimmten Zeitraum nicht mehr als ein vorbestimmtes Maß abgenommen hat, so kann die Stichprobenhäufigkeit verringert werden.

Hierdurch ergibt sich in vorteilhafter Weise eine Anpassung der Vermessung, insbesondere der Auswahl, derart, dass mit einer möglichst geringen Anzahl von Vermessungen von Bauteilen eine zuverlässige Qualitätssicherung erfolgen kann.

In einer weiteren Ausführungsform wird durch die Auswertung für mehrere oder jedes Bauteil der ausgewählten Bauteile mindestens eine bauteilspezifische Eigenschaft bestimmt, wobei eine Anpassung erfolgt, wenn die bauteilspezifische Eigenschaft bei einer vorbestimmten Anzahl von Bauteilen, beispielsweise bei einem, mehreren oder allen Bauteil/en, mehr oder weniger als ein vorbestimmtes Maß von einem, insbesondere vorbestimmten, Sollwert abweicht oder wenn sich die bauteilspezifische Eigenschaft um mehr als ein vorbestimmtes Maß verändert. Diese Abweichung oder Veränderung kann ein Qualitätsmaß sein. Die Eigenschaft kann eine Größe, insbesondere eine eine dimensionelle Größe, sein, beispielsweise eine Dimension eines Prüfmerkmals. Eine Dimension kann hierbei beispielsweise eine Länge, eine Breite, eine Tiefe, ein Durchmesser, ein Umfang, ein Abstand oder eine weitere dimensionelle Größe sein.

So kann z.B. die Stichprobenhäufigkeit erhöht werden, falls die bauteilspezifische Eigenschaft bei einer vorbestimmten Anzahl von Bauteilen mehr als ein vorbestimmtes Maß von dem Sollwert abweicht oder es kann die Stichprobenhäufigkeit verringert werden, falls die bauteilspezifische Eigenschaft bei einer vorbestimmten Anzahl von Bauteilen mehr als ein vorbestimmtes Maß von einem (weiteren) Sollwert abweicht,

Alternativ wird in Abhängigkeit der bauteilspezifischen Eigenschaften, die durch die Auswertung bestimmt wurden, mindestens eine resultierende Eigenschaft bestimmt, wobei eine Anpassung erfolgt, wenn die resultierende Eigenschaft mehr oder weniger als ein vorbestimmtes Maß von einem, insbesondere vorbestimmten, Sollwert abweicht oder wenn sich die resultierende Eigenschaft um mehr als ein vorbestimmtes Maß verändert. Die resultierende Eigenschaft kann beispielsweise ein Mittelwert oder eine Streuung sein. Auch kann die resultierende Eigenschaft eine Fehlerhäufigkeit bezogen auf die Anzahl von ausgewählten Bauteilen, z.B. von Bauteilen einer Charge, sein. Dies kann z.B. angeben, wie viele fehlerhafte Bauteile oder wie viele Fehler insgesamt in der Anzahl von ausgewählten Bauteilen detektiert wurden.

Allgemeiner gesagt, kann die resultierende Eigenschaft eine statistische Größe sein, die eine Verteilung der bauteilspezifischen Eigenschaften repräsentiert bzw. charakterisiert. Die resultierende Eigenschaft bzw. die Abweichung der resultierenden Eigenschaft von einem Sollwert kann ein Qualitätsmaß sein. So kann z.B. die Stichprobenhäufigkeit erhöht werden, falls die resultierende Eigenschaft um mehr als ein vorbestimmtes Maß von dem Sollwert abweicht oder verringert werden, falls die resultierende Eigenschaft um weniger als ein vorbestimmtes (weiteres) Maß von dem Sollwert abweicht.

Hierdurch ergibt sich in vorteilhafter Weise eine Veränderung der Vermessung von Bauteilen, wenn besonders qualitätskritische Eigenschaften um mehr als ein gewünschtes Maß variieren. Insbesondere kann in den erläuterten alternativen Szenarien die Stichprobenhäufigkeit erhöht und/oder eine Ordnungszahl bzw. mehrere Ordnungszahlen der auszuwählenden Bauteile für eine nachfolgende Reihenfolge von produzierten Bauteilen angepasst werden. Variieren solche Eigenschaften nicht oder weniger als das gewünschte Maß, so ist es z.B. möglich, die Stichprobenhäufigkeit zu reduzieren und gegebenenfalls ebenfalls die Ordnungszahl(en) der auszuwählenden Bauteile anzupassen. Somit kann also eine zeitlich schnelle Reaktion auf sich in unerwünschter Weise verändernde qualitätskritische Größe erfolgen, wodurch wiederum eine zuverlässige und genaue Qualitätsprüfung gewährleistet wird.

In einer weiteren Ausführungsform wird nach der Bestimmung des mindestens einen Produktionsparameters der Auswahlparameter auf einen Wert angepasst, der dem Produktionsparameter oder der Änderung des Produktionsparameters zugeordnet ist. Alternativ wird der Auswahlparameter verändert, wobei die Änderung dem Produktionsparameter oder der Änderung des Produktionsparameters zugeordnet ist. Hierfür können vorbestimmte Zuordnungen oder Regeln ausgewertet werden. Dies und entsprechende Vorteile wurden vorhergehend bereits erläutert.

Das Anpassen kann hierbei das Bestimmen eines Auswahlparameters oder seiner Veränderung umfassen. Weiter kann das Anpassen auch das Verändern des aktuell eingestellten Werts des Auswahlparameters umfassen.

Auch vorgeschlagen wird, dass nach einer rein produktionsparameterbedingten Anpassung des mindestens einen Auswahlparameters
a) eine Auswahl von zu vermessenden Bauteilen aus einer vorbestimmten Anzahl von Bauteilen, wobei die Auswahl entsprechend dem produktionsparameterbedingt angepassten Auswahlparameter erfolgt,
b) ein Erzeugen von bauteilspezifischen Messdaten durch die Vermessung der ausgewählten Bauteile mit einer Koordinatenmesseinrichtung und das Auswerten der Messdaten und
c) ein erneutes, rein ergebnisbedingtes Anpassen des mindestens einen Auswahlparameters in Abhängigkeit des Ergebnisses der Auswertung erfolgt.

Eine rein produktionsparameterbedingte Anpassung bezeichnet hierbei eine Anpassung, die in Abhängigkeit des Produktionsparameters oder einer Änderung des Produktionsparameters, nicht aber in Abhängigkeit des Ergebnisses der Auswertung erfolgt. Entsprechend bezeichnet eine rein ergebnisbedingt Anpassung eine Anpassung, die in Abhängigkeit des Ergebnisses der Auswertung, nicht aber in Abhängigkeit des Produktionsparameters oder einer Änderung des Produktionsparameters erfolgt.

Mit anderen Worten wird nach der produktionsparameterbedingten Veränderung des mindestens einen Auswahlparameters eine Auswahl mit dem entsprechend geänderten Auswahlparameter durchgeführt und dann gegebenenfalls eine Anpassung abhängig vom Ergebnis der Auswertung, nicht aber abhängig von dem Produktionsparameter, vorgenommen. Mit anderen Worten kann nach einer produktionsparameterbedingten Veränderung geprüft werden, ob eine weitere Veränderung des Auswahlparameters notwendig ist, um die zuverlässige und genaue Qualitätsprüfung zu gewährleisten, beispielsweise weil Eigenschaften der Bauteile in einer Weise variieren, die eine höhere Stichprobenhäufigkeit zur zuverlässigen Qualitätssicherung erfordert oder die eine geringere Stichprobenhäufigkeit bei gleichzeitig zuverlässiger Qualitätssicherung erlaubt. Dies ermöglicht in vorteilhafter Weise eine zuverlässige und genaue Anpassung des mindestens einen Auswahlparameters.

Weiter vorgeschlagen wird ein Programm, welches, wenn es auf oder durch einen Computer ausgeführt wird, den Computer und eine Koordinatenmesseinrichtung veranlasst, einen, mehrere oder alle Schritte eines Verfahrens zur Vermessung von Bauteilen gemäß einer der in dieser Offenbarung erläuterten Ausführungsformen durchzuführen. Alternativ oder kumulativ wird ein Programmspeichermedium oder Computerprogrammprodukt beschrieben, auf oder in dem das Programm gespeichert ist, insbesondere in einer nicht vorübergehenden, z.B. in einer dauerhaften Form. Alternativ oder kumulativ wird ein Computer beschrieben, der dieses Programmspeichermedium umfasst. Weiter alternativ oder kumulativ wird ein Signal beschrieben, beispielsweise ein digitales Signal, welches Informationen codiert, die das Programm repräsentieren und welches Code-Mittel umfasst, die adaptiert sind, einen, mehrere oder alle Schritte des in dieser Offenbarung dargestellten Verfahrens zur Vermessung durchzuführen. Das Signal kann ein physikalisches Signal, z.B. ein elektrisches Signal, sein, welches insbesondere technisch oder maschinell erzeugt wird. Das Programm kann den Computer auch dazu veranlassen, eine Vermessung eines Bauteils, insbesondere eines ausgewählten Bauteils, mit der Koordinatenmesseinrichtung auszuführen.

Weiter kann das Verfahren zur Vermessung ein computerimplementiertes oder zumindest teilweise computerimplementiertes Verfahren sein. So können z.B. ein, mehrere oder alle Schritte des Verfahrens bis auf das Erzeugen der Messdaten durch einen Computer ausgeführt werden. Eine Ausführungsform für das computerimplementierte Verfahren ist die Benutzung des Computers zur Durchführung einer Datenverarbeitungsmethode. Der Computer kann z.B. zumindest eine Recheneinrichtung, insbesondere einen Prozessor, und z.B. zumindest eine Speichereinrichtung umfassen, um die Daten, insbesondere technisch, zu verarbeiten, z.B. elektronisch und/oder optisch. Ein Computer kann hierbei jede Art von Datenverarbeitungseinrichtung sein. Ein Prozessor kann ein halbleiterbasierter Prozessor sein.

Hierdurch ergibt sich in vorteilhafter Weise ein Programm, durch welches das vorhergehend erläuterte Verfahren mit den ebenfalls erläuterten Vorteilen durchführbar ist.

Weiter vorgeschlagen wird ein System zur Vermessung einer Mehrzahl von Bauteilen, die von einer Produktionseinrichtung produziert werden. Das System umfasst mindestens eine Koordinatenmesseinrichtung und mindestens eine Auswerte- und Steuereinrichtung. Die Auswerte- und Steuereinrichtung kann hierbei einen Mikrocontroller oder eine integrierte Schaltung umfassen oder als solche(r) ausgebildet sein. Das System ist konfiguriert, um ein Verfahren aus einer der in dieser Offenbarung erläuterten Ausführungsformen durchzuführen. Es ist möglich, dass das System auch die Produktionseinrichtung umfasst.

Hierbei kann die Auswerte- und Steuereinrichtung daten- und/oder signaltechnisch mit einer Steuerungseinrichtung zur Steuerung des Betriebs der Koordinatenmesseinrichtung verbunden sein. Auch kann die Auswerte- und Steuereinrichtung daten- und/oder signaltechnisch mit der Produktionseinrichtung verbunden sein.

Die Auswerte- und Steuereinrichtung kann hierbei
- die Auswahl von zu vermessenden Bauteilen und die Auswertung der Messdaten durchführen,
- die Koordinatenmesseinrichtung zur Erzeugung von Messdaten ansteuern, und/oder
- den Produktionsparameter und/oder seine Änderung bestimmen sowie
- die Anpassung des mindestens einen Auswahlparameters durchführen.

Die Auswerte- und Steuereinrichtung kann hierbei aus mehreren Modulen bestehen oder mehrere Module umfassen bzw. durch mehrere Module gebildet sein. Das Ansteuern der Koordinatenmesseinrichtung kann auf Grundlage eines Prüfplans erfolgen.

Hierdurch ergibt sich in vorteilhafter Weise, dass das in dieser Offenbarung beschriebene Verfahren mit den entsprechenden technischen Vorteilen durch das System durchgeführt werden kann.

Weiter kann das das System eine Einrichtung zur Bestimmung eines Produktionsparameters umfassen. Diese Einrichtung kann z.B. ein Sensor, beispielsweise ein Luftdruck-, ein Luftfeuchte- oder Temperatursensor sein. Auch kann die Einrichtung zur Bestimmung eines Produktionsparameters eine Einrichtung zur Bestimmung eines verwendeten Werkzeugs oder eines der weiteren, vorhergehend erläuterten Produktionsparameter sein. Diese Einrichtung kann signal- und/oder datentechnisch mit der Auswerte- und Steuereinrichtung verbunden sein.

Weiter kann das System ein Auswertemodul, ein Planungsmodul und ein Steuermodul umfassen, wobei die Module datentechnisch miteinander verbunden sind. Das Auswertemodul kann hierbei die Auswertung der Messdaten durchführen. Ein Planungsmodul kann hierbei eine Messstrategie zur Vermessung der Vielzahl von Bauteilen bestimmen. Diese Messstrategie kann insbesondere die Auswahl von zu vermessenden Bauteilen aus der Vielzahl gemäß dem mindestens einen Auswahlparameter festlegen. Mit anderen Worten ist durch die Messstrategie festgelegt, wie häufig, wie viele und/oder gegebenenfalls auch welche Bauteile vermessen werden sollen. Durch die Messstrategie kann auch festgelegt werden, wie die Bauteile vermessen werden. So können z.B. ein oder mehrere Prüfplan/-pläne Teil der Messstrategie sein. Das Steuermodul kann eine Auswahleinrichtung und die Koordinatenmesseinrichtung entsprechend der durch das Planungsmodul festgelegten Messstrategie steuern.

Ebenfalls beschrieben wird ein System zur Produktion eines Bauteils, welches eine Produktionseinrichtung sowie ein System zur Vermessung von Bauteilen gemäß einer in dieser Offenbarung beschriebenen Ausführungsformen umfasst.

Die Erfindung wird anhand von Ausführungsbeispielen näher erläutert. Die Figuren zeigen:
- Fig. 1: ein schematisches Flussdiagramm eines erfindungsgemäßen Verfahrens zur Vermessung von Bauteilen,
- Fig. 2: eine schematische und nicht abschließende Darstellung von Regeln zum Anpassen eines Auswahlparameters,
- Fig. 3a: ein schematisches Blockdiagramm zum Anpassen des Auswahlparameters,
- Fig. 3b: ein schematisches Blockdiagramm zum Anpassen des Auswahlparameters,
- Fig. 4: eine schematische Darstellung der Auswahl von zu vermessenden Bauteilen gemäß einer ersten Ausführungsform,
- Fig. 5: eine schematische Darstellung der Auswahl von zu vermessenden Bauteilen gemäß einer weiteren Ausführungsform,
- Fig. 6: ein schematisches Blockdiagramm eines erfindungsgemäßen Systems,
- Fig. 7: ein schematisches Blockdiagramm eines erfindungsgemäßen Systems in einer weiteren Ausführungsform und
- Fig. 8: ein schematisches Flussdiagramm eines erfindungsgemäßen Verfahrens gemäß einer weiteren Ausführungsform.

Nachfolgend bezeichnen Elemente mit gleichen Bezugszeichen Elemente mit gleichen oder ähnlichen technischen Merkmalen.

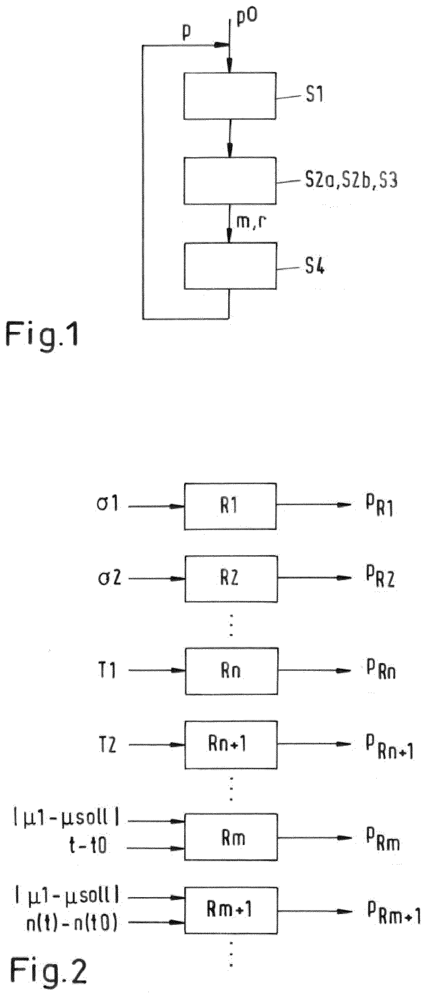

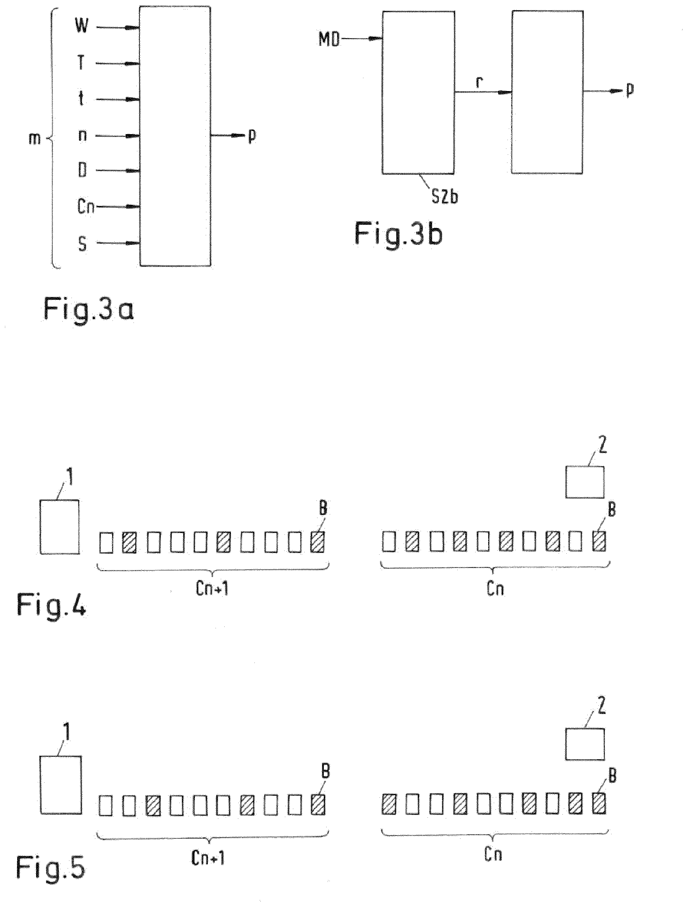

Fig. 1 zeigt ein schematisches Flussdiagramm eines erfindungsgemäßen Verfahrens zur Vermessung von Bauteilen B (siehe Fig. 4). Diese Bauteile B werden von einer Produktionseinrichtung 1 (siehe ebenfalls Fig. 4) produziert. Das Verfahren umfasst das Auswählen S1 von zu vermessenden Bauteilen B aus einer Vielzahl von produzierten Bauteilen B. Die Auswahl erfolgt gemäß mindestens einem Auswahlparameter p. In Fig. 1 ist dargestellt, dass zu Beginn des Verfahrens, also vor der ersten Anpassung, die Auswahl von zu vermessenden Bauteilen B mit einem (unangepassten) Ausgangs-Auswahlparameter p0 erfolgt.

Der Auswahlparameter p, p0 kann insbesondere eine Stichprobenhäufigkeit sein oder repräsentieren. Es ist vorstellbar, dass die Auswahl gemäß mehrerer Auswahlparameter p, p0 erfolgt, wobei z.B. ein erster Auswahlparameter die erläuterte Stichprobenhäufigkeit sein oder repräsentieren kann, wobei ein weiterer Auswahlparameter eine Ordnungszahl eines auszuwählenden Bauteils B aus einer Reihenfolge von produzierten Bauteilen B sein kann.

Weiter erfolgt ein Erzeugen S2a von bauteilspezifischen Messdaten MD durch die Vermessung der ausgewählten Bauteile B mit einer Koordinatenmesseinrichtung 2 (siehe z.B. Fig. 4) sowie das Auswerten S2b dieser durch die Vermessung erzeugten Messdaten MD. Hierbei können verschiedene Koordinatenmesseinrichtungen verwendet werden, beispielsweise Koordinatenmesseinrichtungen 2 mit einem optischen Sensor oder Koordinatenmesseinrichtungen 2 mit einem taktilen Sensor. Selbstverständlich ist es auch möglich, tomographiebasierte Koordinatenmesseinrichtungen 2 zu verwenden.

Durch das Auswerten S2b der Messdaten MD (siehe z.B. Fig. 3B) kann beispielsweise als Ergebnis mindestens eine bauteilspezifische Eigenschaft, insbesondere eine dimensionelle Größe, bestimmt werden. Diese bauteilspezifische Größe kann eine Kenngröße eines bauteilspezifischen Prüfmerkmals sein, z.B. eine dimensionelle Größe wie z.B. eine Länge, eine Breite, ein Durchmesser, eine Tiefe, ein Abstand von einem Referenzpunkt oder einer Referenzlinie oder eine weitere dimensionelle Größe. Auch kann durch das Auswerten S2b der Messdaten MD eine bauteilspezifische Größe bestimmt werden, die die Qualität des vermessenden Bauteils oder die Qualität eines Prüfmerkmals des vermessenden Bauteils B repräsentiert.

Weiter ist es möglich, dass durch das Auswerten S2b der Messdaten MD geprüft wird, ob das Bauteil jeweilige, vermessene Bauteil B eine Qualitätsprüfung besteht, insbesondere ob vorbestimmte Qualitätskriterien für das Bauteil B erfüllt sind. Diese Qualitätsprüfung, insbesondere die Prüfung der Prüfkriterien, kann in Abhängigkeit der bauteilspezifischen Eigenschaften erfolgen. Das Ergebnis r der Auswertung kann also sein, wie viele Bauteile B die Qualitätsprüfung bestanden haben.

Es ist weiter möglich, dass bauteilspezifische Eigenschaften mehrerer oder jedes Bauteils B der ausgewählten Mehrzahl von Bauteilen B bestimmt werden, wobei dann in Abhängigkeit dieser bauteilspezifischen Eigenschaft mindestens eine resultierende Eigenschaft als Ergebnis r der Auswertung bestimmt wird. Diese kann beispielsweise ein Mittelwert oder eine Streuung der bauteilspezifischen Eigenschaft sein oder repräsentieren.

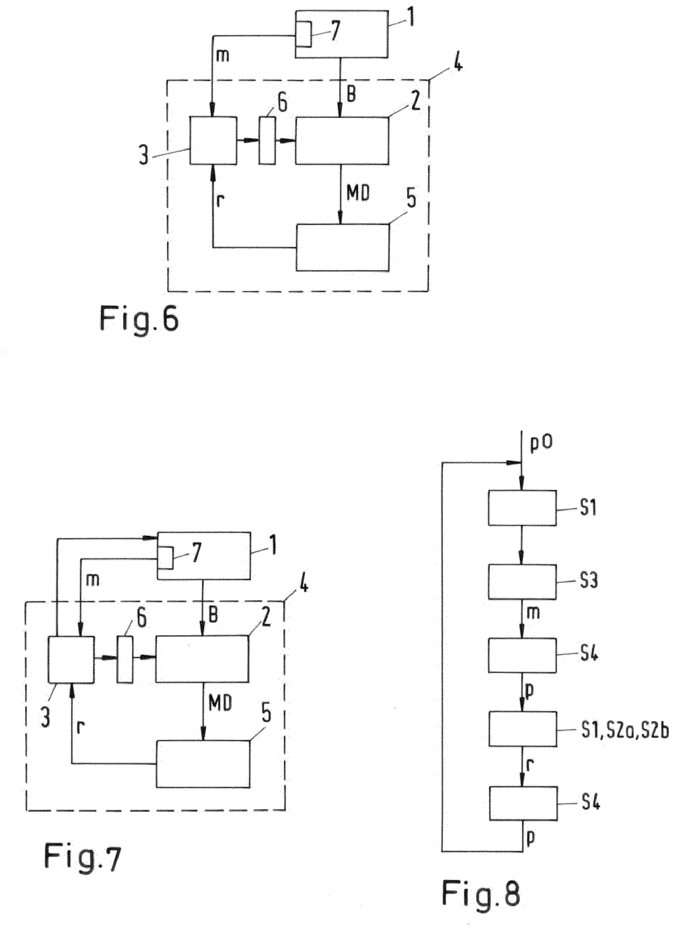

Alternativ oder kumulativ zum Erzeugen S2a von bauteilspezifischen Messdaten MD und dem Auswerten S2b kann ein Bestimmen S3 mindestens eines Produktionsparameters m (siehe Fig. 6) erfolgen. Exemplarische Produktionsparameter m werden nachfolgend noch näher erläutert.

Weiter erfolgt ein Anpassen S4 des mindestens einen Auswahlparameters p, p0 in Abhängigkeit des Ergebnisses r der Auswertung und/oder in Abhängigkeit des Produktionsparameters m oder einer Änderung des Produktionsparameters m.

Hierbei ist es möglich, dass die Anpassung des Auswahlparameters p ergebnisbedingt, nicht aber produktionsparameterbedingt erfolgt. Alternativ ist es möglich, dass das Anpassen S4 des Auswahlparameters p produktionsparameterabhängig, nicht aber ergebnisabhängig erfolgt. Weiter ist es möglich, dass das Anpassen S4 sowohl ergebnisals auch produktionsparameterbedingt.

Eine ergebnisbedingte Anpassung S4 kann bedeuten, dass das Anpassen S4 erfolgt, wenn das Ergebnis r z.B.
- einen vorbestimmten Wert annimmt,
- mehr oder nicht mehr als ein vorbestimmtes Maß von einem vorbestimmten Sollwert abweicht und/oder
- sich in vorbestimmter Weise ändert

Auch kann in Abhängigkeit der Auswertung für mehrere oder jedes Bauteil B der ausgewählten Bauteile B ein Qualitätsmaß bestimmt werden, z.B. als Verhältnis zwischen der Anzahl der ausgewählten Bauteile, die eine Qualitätsprüfung in Abhängigkeit der Auswertung bestanden haben, und der Gesamtzahl der ausgewählten Bauteile, wobei die ergebnisbedingte Anpassung S4 in Abhängigkeit des Qualitätsmaßes oder dessen Änderung erfolgt.

Eine produktionsparameterabhängige Anpassung S4 kann bedeuten, dass das Anpassen S4 erfolgt, wenn der Produktionsparameter m
- einen vorbestimmten Wert annimmt,
- mehr oder nicht mehr als ein vorbestimmtes Maß von einem vorbestimmten Sollwert abweicht und/oder
- sich in vorbestimmter Weise, insbesondere während eines vorbestimmten Zeitraums, ändert oder nicht ändert.

Selbstverständlich sind auch andere ergebnisbedingte oder produktionsparameterbedingte Anpassungen S4 vorstellbar. Es ist insbesondere vorstellbar, dass eine Anpassung auch dann erfolgt, wenn sich der Produktionsparameter m während einer vorbestimmten Zeitdauer nicht oder nicht mehr als ein vorbestimmtes Maß verändert.

Insbesondere die produktionsparameterbedingte Anpassung kann zeitversetzt erfolgen. So kann die Anpassung erst eine vorbestimmte Zeitdauer nachdem ein Kriterium zur Anpassung erfüllt ist, erfolgen. Dies wurde vorgehend erläutert.

Dass der Auswahlparameter p angepasst wird kann bedeuten, dass so ein Wert neu bestimmt wird, wodurch sich jedoch nicht zwingend der aktuelle Wert des Auswahlparameters p ändern muss. Selbstverständlich ist es jedoch auch möglich, dass sich durch das Anpassen S4 der Wert des Auswahlparameters p ändert. Das Anpassen S4 kann beispielsweise erfolgen, indem eine Änderung des aktuell eingestellten Auswahlparameters p bestimmt wird und der angepasste Auswahlparameter p dann als der gemäß der Änderung veränderte aktuelle Auswahlparameter p bestimmt wird.

Es ist möglich, dass zusätzlich zum Erzeugen und Auswerten S2a, S2b von bauteilspezifischen Messdaten MD oder zusätzlich zum Bestimmen S3 des mindestens einen Produktionsparameters m mindestens ein Messparameter bestimmt wird, wobei das Anpassen des mindestens einen Auswahlparameters zusätzlich messparameterabhängig erfolgt.

Vorzugsweise erfolgt das Anpassen S4 automatisiert. Hierfür kann das Ergebnis r eine Eingangsgröße für ein Verfahren zur Anpassung bilden, dessen Ausgangsgröße ein angepasster Auswahlparameter p ist. Alternativ oder kumulativ kann der mindestens eine Produktionsparameter p oder seine Änderung eine Eingangsgröße für das Verfahren zum Anpassen S4 des Auswahlparameters p bilden. Diesbezüglich gelten die vorhergehend angeführten Erläuterungen zum Anpassen S4 in Abhängigkeit des Ergebnisses r der Auswertung entsprechend. Durch das Verfahren zur Anpassung kann ein angepasster Auswahlparameter p bestimmt werden, beispielsweise ein Auswahlparameter p der gemäß einer vorbestimmten Zuordnung der Eingangsgröße zugeordnet ist oder der sich aufgrund eines vorbestimmten funktionellen Zusammenhangs aus der Eingangsgröße ergibt.

Vorzugsweise erfolgt das Anpassen S4 automatisiert, beispielsweise mittels einer entsprechenden Auswerteeinrichtung 3 (siehe Fig. 6), die beispielsweise als Mikrocontroller oder integrierte Schaltung ausgebildet oder eine(n) solche(n) umfassen kann.

Weiter vorzugsweise erfolgt das Anpassen S4 des Auswahlparameters p regelbasiert. In Fig. 2 sind exemplarische Regeln R1, R2, Rn, Rn+1, Rm, Rm+1 dargestellt. Eine erste Regel bildet einen Zusammenhang bzw. eine Zuordnung zwischen einem ersten Wert σ1 einer Streuung und einem regelspezifischen Auswahlparameter p_{R1} ab.

So kann beispielsweise als Ergebnis r der Auswertung der Messdaten MD ein Wert einer Streuung einer bauteilspezifischen Eigenschaft als resultierende Eigenschaft bestimmt werden, die eine Eingangsgröße für die erste Regel R1 bildet. Wird also dieser erste Wert σ1 bestimmt, so erfolgt eine Anpassung des Auswahlparameters p auf die regelspezifischen Ausgangsgröße, also den Auswahlparameter P_{R1}.

Eine zweite Regel R2 bildet einen Zusammenhang zwischen einem zweiten Wert der Streuung σ2 und dem Auswahlparameter p ab. Wird also als Ergebnis r der Auswertung dieser zweite Wert σ2 bestimmt, so folgt eine des Auswahlparameters p auf die regelspezifischen Ausgangsgröße, also den streuungsspezifischen Auswahlparameter p_{R2}.

Somit kann durch eine oder mehrere Regeln R1, R2 ein Zusammenhang zwischen mehreren oder gar allen möglichen Werten einer Streuung und einem streuungsabhängigen Auswahlparameter p abgebildet werden.

Es ist auch möglich, dass durch die Regel eine Änderung des Auswahlparameters p bestimmt wird und dann der angepasste Auswahlparameter p durch Veränderung des aktuell eingestellten Auswahlparameters p entsprechend der derart bestimmten Änderung bestimmt wird.

Weiter dargestellt ist eine n-te Regel Rn, die einen Zusammenhang zwischen einer ersten Produktionstemperatur T1 und einem regelspezifischen Auswahlparameter p_{Rn} abbildet. Die erste Produktionstemperatur T1 bildet hierbei einen exemplarischen Produktionsparameter m. Wird detektiert, dass die Produktionstemperatur der ersten Produktionstemperatur T1 entspricht, so wird der Auswahlparameter p auf den entsprechenden Ausgangswert p_{Rn} der n-ten Regel angepasst. Ebenfalls dargestellt ist eine n+1-te Regel Rn+1. Diese stellt in entsprechender Weise einen Zusammenhang zwischen einer zweiten Produktionstemperatur T2 und einem Auswahlparameter p_{Rn+1} dar.

Weiter dargestellt ist eine m-te Regel Rm. Eingangsgrößen dieser m-ten Regel bilden ein Betrag einer Abweichung eines ersten Mittelwerts µ1 einer bauteilspezifischen Eigenschaft von einem Soll-Wert µsoll sowie eine Zeitdauer zwischen einem aktuellen Zeitpunkt t und einem Referenzzeitpunkt t0, beispielsweise dem Zeitpunkt der zuletzt erfolgten Anpassung S4 des Auswahlparameters p. Nehmen diese beiden Eingangsgrößen vorbestimmte Werte an, insbesondere gleichzeitig, so wird als Ausgangsparameter ein regelspezifischer Wert p_{Rm} bestimmt und der aktuell eingestellte Auswahlparameter p auf diesen Wert angepasst.

Ebenfalls dargestellt ist eine m+1-te Regel Rm+1, deren Eingangsgrößen der Betrag der erläuterten Abweichung sowie die Abweichung zwischen einer zum aktuellen Zeitpunkt t produzierten Anzahl n(t) von Bauteilen B von einer zu einem bestimmten Zeitpunkt, beispielsweise dem Zeitpunkt der zuletzt erfolgen Anpassung, produzierten Anzahl n(t0) von Bauteilen B. Nehmen diese beiden Eingangsgrößen, insbesondere gleichzeitig, vorbestimmte Werte an, so kann der entsprechend regelspezifische Auswahlparameter p_{Rm+1} als angepasster Auswahlparameter p eingestellt werden.

Die in Fig. 2 dargestellten exemplarischen Regeln R1, R2, ..., Rn, Rn+1, ..., Rm, Rm+1 können beispielsweise durch maschinelles Lernen bestimmt werden, beispielsweise in Abhängigkeit einer interpretierenden Auswertung der Zusammenschau von bereits erfassten oder bereits bestimmten Produktionsparametern m sowie der Ergebnisse r der Auswertung von Messdaten MD, die durch die Koordinatenmesseinrichtung 2 bei der Vermessung der gemäß dieser Produktionsparameter m produzierten Bauteile B erzeugt wurden. Weiter ist es möglich, dass die dargestellten Regeln R1, R2, ..., Rn, Rn+1, ..., Rm, Rm+1 adaptiert werden, beispielsweise ebenfalls durch eine interpretierenden Auswertung von Produktionsparameter m und Ergebnissen r der Auswertung von Messdaten MD, die unter Anwendung der gemäß den existierenden Regeln R1, R2, ..., Rn, Rn+1, ..., Rm, Rm+1 erzeugt wurden.

Es ist möglich, die in Fig. 2 dargestellten Regeln R1, R2, ... Rn, Rn+1, ... Rm, Rm+1 durch Verfahren des maschinellen Lernens zu bestimmen. So ist es beispielsweise möglich, über einen vorbestimmten Zeitraum sowohl Produktionsparameter m als auch Messdaten MD und/oder Ergebnisse r der Auswertung dieser Messdaten MD zu erfassen und zu speichern. Hiernach können in der derart erfassten Datenmenge insbesondere mittels Verfahren des Data-Minings, Zusammenhänge zwischen Veränderungen der Produktionsparameter m und hierdurch bedingten Veränderungen der Messdaten MD bzw. der Ergebnisse r analysiert werden. Weiter können dann Auswahlparameter p bestimmt werden, die für die sich einstellenden Ergebnisse r eine zuverlässige und ausreichend genaue Qualitätsprüfung der produzierten Bauteile gewährleisten.

Diese Bestimmung kann in Abhängigkeit einer vorbekannten Zuordnung erfolgen. So können beispielsweise bestimmten Ergebnissen r der Auswertung Auswahlparameter p zugeordnet sein, die im Falle dieser Messergebnisse die zuverlässige und ausreichend genaue Qualitätsprüfung sicherstellen.

So kann beispielsweise festgestellt werden, ob eine Änderung eines oder mehrerer Produktionsparameter m zu einer Verbesserung der Qualität der produzierten Bauteile B führt, wobei eine Verbesserung beispielsweise detektiert werden kann, wenn eine Abweichung eines Mittelwerts einer bauteilspezifischen Größe von einem Sollwert geringer als ein vorbestimmtes Maß ist und/oder eine Streuung einer bauteilspezifischen Größe kleiner als ein vorbestimmtes Maß ist. Dann kann ein Auswahlparameter entsprechend angepasst werden, beispielsweise eine Stichprobenhäufigkeit verringert werden.

Auch ist es möglich, über einen vorbestimmten Zeitraum Produktionsparameter m, Messdaten MD und/oder Ergebnisse r einer Auswertung dieser Messdaten MD sowie von einem Nutzer vorgenommene Anpassungen des mindestens einen Auswahlparameters p zu erfassen und gegebenenfalls zu speichern. Dann kann durch eine Auswertung dieser Datenmenge ein Zusammenhang zwischen durch den Nutzer vorgenommenen Anpassungen, dem Ergebnis r der Auswertung und/oder dem Produktionsparameter p bzw. seiner Änderung bestimmt werden und zur Bestimmung der in Fig. 2 dargestellten Regeln R1, R2, ... Rn, Rn+1, ... Rm, Rm+1verwendet werden.

Die derart erfassten Eingangsgrößen, also Produktionsparameter, insbesondere eingestellte bzw. gegebene Produktionsparameter oder Änderungen eines Produktionsparameters, sowie Ausgangsgrößen, also der durch die Anpassung einzustellende mindestens eine Auswahlparameter oder seine Änderung, können - wie vorhergehend erläutert - Trainingsdaten zur Bestimmung eines Modells durch Verfahren des maschinellen Lernens bilden. Mit diesem Modell können dann für Eingangsgrößen, die von den Eingangsgrößen der Trainingsdaten verschieden sind, Ausgangsgrößen bestimmt werden.

In entsprechender Weise kann eine Adaption der Regeln erfolgen. So kann beispielsweise erfasst werden, ob ein Nutzer einen durch eine Regel bestimmten Auswahlparameter p nachträglich verändert. Ist dies der Fall, so kann die entsprechende Regel adaptiert werden. Beispielsweise kann das Modell neu gelernt oder neu trainiert werden.

Fig. 3a zeigt eine schematische Bestimmung eines Auswahlparameters p, der in Abhängigkeit von exemplarischen Produktionsparametern m bestimmt wird, wobei der aktuell eingestellte Auswahlparameter p auf den derart bestimmten Auswahlparameter p angepasst werden kann, sodass das Vermessen S1 (siehe Fig. 1) dann gemäß dem angepassten Auswahlparameter p durchgeführt werden kann. Exemplarisch dargestellt ist als Produktionsparameter m ein zur Produktion verwendetes Werkzeug W. Ein weiterer exemplarischer Produktionsparameter m ist eine Produktionstemperatur T. Ein weiterer exemplarischer Produktionsparameter m ist eine Produktionszeit t, wobei in Abhängigkeit dieser insbesondere eine Produktionszeitdauer seit einem vorbestimmten Zeitpunkt t0 bestimmt werden kann.

Ein weiterer exemplarischer Produktionsparameter m ist eine Anzahl n von produzierten Bauteilen B, wobei in Abhängigkeit dieser insbesondere eine Anzahl von seit einem vorbestimmten Zeitpunkt produzierten Bauteilen B bestimmt werden kann.

Ein weiterer exemplarischer Produktionsparameter m ist ein Produktionsluftdruck D.

Ein weiterer exemplarischer Produktionsparameter m ist eine Ordnungszahl einer Charge Cn, wobei in Abhängigkeit dieser insbesondere eine Anzahl der seit einem vorbestimmten Zeitpunkt produzierten Chargen C bestimmt werden (siehe Fig. 4).

Ein weiterer exemplarischer Produktionsparameter m ist eine Schichtgruppe S, beispielsweise eine Frühschicht, eine Tagschicht, eine Spätschicht oder eine Nachschicht.

Hierbei ist es möglich, dass der Auswahlparameter p in Abhängigkeit von genau einem der dargestellten Produktionsparameter m oder aber in Abhängigkeit von mehreren dargestellten Produktionsparametern m bestimmt wird. Alternativ oder kumulativ ist es möglich, dass der Auswahlparameter p in Abhängigkeit einer Änderung genau eines der dargestellten exemplarischen Produktionsparameter m oder aber in Abhängigkeit der Änderungen von mehreren der dargestellten Produktionsparameter m bestimmt wird.

Somit können die dargestellten Produktionsparameter m Eingangsgrößen zur Bestimmung, insbesondere zur regelbasierten Bestimmung, des Auswahlparameters bilden. Nicht in Fig. 3b dargestellt ist der Schritt des Bestimmens des/der Produktionsparameter m.

In Fig. 3b ist eine exemplarische Bestimmung des Auswahlparameters p in Abhängigkeit der Messdaten MD dargestellt, die durch die Vermessung von gemäß dem eingestellten Auswahlparameter p ausgewählten Bauteilen B erzeugt wurden. Hierbei erfolgt ein Auswerten S2b der Messdaten MD und es wird ein Ergebnis r der Auswertung bestimmt. Beispielhafte Ergebnisse r wurden vorhergehend bereits erläutert. Dann erfolgt das Bestimmen des Auswahlparameters p in Abhängigkeit dieses Ergebnisses r. Diese Bestimmung kann ebenfalls regelbasiert erfolgen. Nach der Bestimmung kann der aktuell eingestellte Auswahlparameter p auf den derart bestimmten Wert eingestellt werden, wodurch die Anpassung erfolgt.

Bei der in Fig. 3a dargestellten Ausführungsform ist es beispielsweise möglich, dass der Auswahlparameter p bei dem k-ten Bauteil B, welches seit einem vorbestimmten Zeitpunkt t0 (siehe Fig. 2) produziert oder vermessen wurde, angepasst wird, beispielsweise auf einen vorbestimmten Wert oder um einen vorbestimmten Wert verändert, insbesondere erhöht, wird.

Auch ist es möglich, dass der Auswahlparameter p bei Änderung der Schichtgruppe S, also bei einem Schichtwechsel, angepasst wird, beispielsweise auf einen vorbestimmten Wert oder um einen vorbestimmten Wert verändert, insbesondere erhöht, wird.

Auch ist es möglich, dass der Auswahlparameter p jeweils nach Ablauf vorbestimmter Zeitintervalle, beispielsweise alle 24 Stunden oder alle 48 Stunden, angepasst wird, beispielsweise auf einen vorbestimmten Wert oder um einen vorbestimmten Wert verändert, insbesondere erhöht, wird.

Auch ist es möglich, dass der Auswahlparameter p bei einem Werkzeugwechsel, einem Wechsel der Charge C oder bei einer Veränderung von Umgebungsbedingungen, beispielsweise der Produktionstemperatur T oder dem Produktionsdruck D, angepasst wird, beispielsweise auf einen vorbestimmten Wert oder um einen vorbestimmten Wert verändert, insbesondere erhöht, wird.

Bei der in Fig. 3b dargestellten Bestimmung und Anpassung des Auswahlparameters ist es möglich, dass der Auswahlparameter p verändert wird, wenn festgestellt wird, dass die Eigenschaften der produzierten Bauteile B bzw. deren zeitlicher Verlauf eine Gewährleistung einer zuverlässigen Qualitätsprüfung mit einem veränderten Auswahlparameter p ermöglicht.

Fig. 4 zeigt eine exemplarische Darstellung einer Auswahl von Bauteilen B zur Vermessung durch eine Koordinatenmesseinrichtung 2. Die Bauteile B wurden hierbei von einer Produktionseinrichtung 1 produziert bzw. hergestellt, insbesondere zumindest teilweise hergestellt. Hierbei ist dargestellt, dass eine Charge Cn, Cn+1 zehn Bauteile B umfasst, wobei der Übersichtlichkeit halber nur ein Bauteil B pro Charge Cn, Cn+1 mit einem Bezugszeichen versehen ist. Dargestellt ist eine n-te Charge Cn und eine n+1-te Charge Cn+1. Schraffierte Bauteile B stellen hierbei ausgewählte Bauteile B dar, die durch die Koordinatenmesseinrichtung 2 zu vermessen sind. Hierbei ist dargestellt, dass eine Stichprobenhäufigkeit für die n-te Charge Cn 5/10 beträgt, wobei jedes zweite Bauteil B der n-ten Charge Cn gemessen wird.

Für die n+1-te Charge Cn+1 beträgt die Stichprobenhäufigkeit 3/10, wobei jedes vierte Bauteil B vermessen wird.

Somit erfolgte eine Anpassung S4 der Stichprobenhäufigkeit sowie der Ordnungszahlen der auszuwählenden Bauteile B in der Reihenfolge von produzierten Bauteilen B einer Charge Cn, Cn+1. In Fig. 4 ist dargestellt, dass die Stichprobenhäufigkeit verringert wurde. Es ist jedoch selbstverständlich auch vorstellbar, dass die Stichprobenhäufigkeit bei einem Chargenwechsel erhöht wird.

Fig. 5 zeigt eine exemplarische Darstellung von auszuwählenden Bauteilen B gemäß einer weiteren Ausführungsform. Im Unterschied zu der in Fig. 4 dargestellten Ausführungsform sind die Stichprobenhäufigkeiten für die n-te und die n+1-te Charge Cn, Cn+1 gleich. Allerdings unterscheiden sich die Ordnungszahlen der zu vermessenden Bauteile B in der Reihenfolge von produzierten Bauteilen B einer Charge Cn, Cn+1. So werden bei dem in Fig. 4 dargestellten Ausführungsbeispiel in der n-ten Charge Cn das erste, das dritte, das fünfte, das siebte und das neunte Bauteil B ausgewählt, während bei dem in Fig. 5 dargestellten Ausführungsbeispiel das erste, das zweite, das vierte, das siebte und das zehnte Bauteil B ausgewählt werden. Weiter wird bei dem in Fig. 4 dargestellten Ausführungsbeispiel das erste, das fünfte und das neunte Bauteil der n+1-te Charge Cn+1 ausgewählt, während bei dem in Fig. 5 dargestellten Ausführungsbeispiel das erste, das vierte und das achte Bauteil B ausgewählt werden.

Fig. 6 zeigt ein exemplarisches Blockschaltbild eines erfindungsgemäßen Systems 4 zur Vermessung einer Mehrzahl von Bauteilen B (siehe Fig. 4). Das System umfasst eine Koordinatenmesseinrichtung 2 sowie eine Auswerte- und Steuereinrichtung, die ein Auswertemodul 5, ein Planungsmodul 3 und ein Steuermodul 6 umfasst bzw. durch diese Module gebildet wird. Dargestellt ist weiter eine Produktionseinrichtung 1, die ebenfalls Teil des Systems 4 sein kann, aber nicht zwingend sein muss. Ebenfalls dargestellt ist eine Einrichtung 7 zur Bestimmung eines Produktionsparameters m, beispielsweise ein Sensor. Nicht dargestellt ist eine Transporteinrichtung zum Transport von produzierten Bauteilen B zu der Koordinatenmesseinrichtung 2.

Alle oder ausgewählte produzierte Bauteile B werden, beispielsweise über die nicht dargestellte Transporteinrichtung, der Koordinatenmesseinrichtung 2 zugeführt.

Die ausgewählten Bauteile B werden dann durch die Koordinatenmesseinrichtung 2 vermessen, wobei Messdaten MD erzeugt werden. Werden alle produzierten Bauteile B der Koordinatenmesseinrichtung 2 zugeführt, so werden also nur ausgewählte Bauteile B vermessen.

Diese Messdaten MD werden von der Koordinatenmesseinrichtung 2 an das Auswertemodul 5 übertragen. Hierzu kann die Koordinatenmesseinrichtung 2 datentechnisch und/oder signaltechnisch mit dem Auswertemodul 5 verbunden sein. Das Auswertemodul 5 kann insbesondere eine statistische Auswertung der ermittelten Messdaten MD vornehmen. Beispielsweise kann das Auswertemodul 5, wie vorhergehend erläutert, als Ergebnis r der Auswertung ein Mittelwert µ1 und/oder eine Streuung σ von bauteilspezifischen Größen der vermessenen Bauteile B bestimmen.

Ein solches Ergebnis r kann dann an das Planungsmodul 3 übertragen werden. Hierzu kann das Auswertemodul 5 daten- und/oder signaltechnisch mit dem Planungsmodul 3 verbunden sein. Das Planungsmodul 3 kann dann ein Anpassen S4 des mindestens einen Auswahlparameters p (siehe Fig. 1) in Abhängigkeit des Ergebnisses r durchführen.

Z.B. kann das Planungsmodul 3 eine angepasste Messstrategie zur Vermessung der Vielzahl von produzierten Bauteilen B bestimmen. In Abhängigkeit dieser Messstrategie kann dann ein Steuermodul 6 die Auswahl und Vermessung von Bauteilen B steuern, beispielsweise durch die Steuerung der nicht dargestellten Transporteinrichtung und/oder der Koordinatenmesseinrichtung 6. Hierzu kann das Planungsmodul 3 daten- und/oder signaltechnisch mit dem Steuermodul 6 verbunden sein. Die Messstrategie legt also fest, wie viele und gegebenenfalls auch welche Bauteile B in der Abfolge von produzierten Bauteilen B zur Vermessung durch die Koordinatenmesseinrichtung 2 ausgewählt werden. Durch die Messtrategie kann aber auch ein bauteilspezifischer Prüfplan festgelegt sein, durch den insbesondere der zu verwendende Sensor, der zur Vermessung zu nutzende Fahrweg des Sensors und die bauteilspezifische Messstrategie festgelegt ist.

Es ist auch möglich, dass das Auswertemodul 5 in das Planungsmodul 3 integriert ist bzw. beide Module 3, 5 als gemeinsames Modul ausgeführt sind. Auch denkbar ist es, dass das Auswertemodul 5 das Anpassen S4 des einen Auswahlparameters p in Abhängigkeit des Ergebnisses r durchführt, wobei dieser Auswahlparameter p dann an das Planungsmodul 3 übertragen wird und dieses dann die angepasste Messstrategie bestimmt.

Weiter dargestellt ist, dass die Einrichtung 7 zur Bestimmung eines Produktionsparameters m ebenfalls daten- und/oder signaltechnisch mit dem Planungsmodul 3 verbunden ist. Das Planungsmodul 3 kann somit ein Anpassen des mindestens einen Auswahlparameters p auch in Abhängigkeit des Produktionsparameters m oder seiner Änderung durchführen und eine angepasste Messstrategie bestimmen.

Es ist natürlich auch vorstellbar, dass die Einrichtung 7 zur Bestimmung eines Produktionsparameters m ebenfalls daten- und/oder signaltechnisch mit dem Auswertemodul 5 verbunden ist und den Produktionsparameter m an dieses Modul 5 überträgt, welches dann ein Anpassen des mindestens einen Auswahlparameters p auch in Abhängigkeit des Produktionsparameters m oder seiner Änderung durchführen kann und diesen Auswahlparameter p dann - wie vorhergehend erläutert - an das Planungsmodul 3 überträgt.

Fig. 7 zeigt ein schematisches Blockschaltbild eines erfindungsgemäßen Systems 4 in einer weiteren Ausführungsform. Im Unterschied zu der in Fig. 6 dargestellten Ausführungsform ist dargestellt, dass das Planungsmodul 3 neben der Anpassung S4 des mindestens einen Auswahlparameters p (siehe Fig. 1) in Abhängigkeit des Ergebnisses r der Auswertung und/oder in Abhängigkeit des Produktionsparameters m bzw. seiner Änderung auch mindestens einen Produktionsparameter p zur Produktion der Bauteile B durch die Produktionseinrichtung 1 anpassen kann. Hierzu kann das Planungsmodul 3 beispielsweise geeignete Steuerbefehle an eine Einrichtung zur Einstellung eines Sollwerts eines Produktionsparameters, beispielsweise einer Produktionstemperatur oder eines Produktionsdrucks, oder eines für die Produktion zu verwendenden Werkzeugs W ermitteln, die dann den Produktionsparameter auf den entsprechenden Sollwert einstellt. Die Einstellung des Produktionsparameters m durch das Planungsmodul kann ergebnisbedingt, insbesondere rein ergebnisbedingt, erfolgen, also in Abhängigkeit eines Werts oder einer Änderung des Ergebnisses r der Auswertung. Hierdurch kann in vorteilhafter Weise eine zeitnahe Veränderung des Produktionsprozesses erfolgen, um eine Qualität der produzierten Bauteile B sicherzustellen.

Das Planungsmodul 3, das Auswertemodul 5 und das Steuermodul 6 können hierbei jeweils eine Recheneinrichtung bzw. Datenverarbeitungseinrichtung umfassen, die beispielsweise als Mikrocontroller oder integrierte Schaltung ausgebildet ist oder eine(n) solche(n) umfassen kann. Selbstverständlich ist es aber auch möglich, dass die Funktionalitäten der Module durch eine gemeinsame Recheneinrichtung oder Datenverarbeitungseinrichtung bereitgestellt werden.

Fig. 8 zeigt ein schematisches Flussdiagramm eines erfindungsgemäßen Verfahrens in einer weiteren Ausführungsform. Entsprechend der in Fig. 1 dargestellten Ausführungsform erfolgt ein Auswählen S1 von zu vermessenden Bauteilen aus einer Vielzahl von Bauteilen B gemäß eines Ausgangs-Auswahlparameters p0. Weiter erfolgt ein Bestimmen S3 mindestens eines Produktionsparameters m sowie ein Anpassen S4 des mindestens einen Auswahlparameters p in Abhängigkeit des Produktionsparameters m oder seiner Änderung. Das Anpassen erfolgt somit rein produktionsparameter- und nicht ergebnisbedingt.

Weiter wird nach dieser rein produktionsparameterbedingten Anpassung S4 eine Auswahl S1 gemäß dem produktionsparameterbedingt angepassten Auswahlparameter p durchgeführt, wobei dann ein Erzeugen S2a von bauteilspezifischen Messdaten MD durch die Vermessung der entsprechend ausgewählten Bauteile B mit einer Koordinatenmesseinrichtung 2 (siehe Fig. 6) und ein Auswerten S2b der Messdaten MD erfolgt. Weiter erfolgt dann ein Anpassen S4 des mindestens einen Auswahlparameters p in Abhängigkeit des Ergebnisses r der Auswertung. Die Anpassung erfolgt rein ergebnis- und nicht produktionsparameterbedingt. Hiernach erfolgt eine Auswahl S1 gemäß dem angepassten Auswahlparameter p.

### Bezugszeichenliste

- 1: Produktionseinrichtung
- 2: Koordinatenmesseinrichtung
- 3: Planungsmodul
- 4: System
- 5: Auswertemodul
- 6: Steuermodul
- 7: Einrichtung zur Bestimmung
- S1: Auswählen
- S2a: Erzeugen
- S2b: Analysieren
- S3: Bestimmen mindestens eines Produktionsparameters
- S4: Anpassen
- p: Auswahlparameter
- p0: Ausgangs-Auswahlparameter
- m: Produktionsparameter
- r: Ergebnis der Auswertung
- σ1, σ2: Streuungen
- T, T1, T2: Produktionstemperatur
- µ1: Mittelwert
- µsoll: Soll-Mittelwert
- t: Zeitpunkt
- t0: vorbestimmter Zeitpunkt
- n(t): Anzahl
- n(t0): Anzahl
- R1, R2, Rn, Rn+1, Rm, Rm+1: Regel
- p_{R1}, p_{R2},p_{Rn}, p_{Rn+1}, p_{Rm}, p_{Rm+1}: regelspezifischer Auswahlparameter
- W: Werkzeug
- n: Anzahl
- D: Produktionsdruck
- S: Schichtgruppe
- Cn: n-te Charge
- Cn+1: n+1-te Charge
- B: Bauteil

## Patentansprüche

1. Verfahren zur Vermessung von Bauteilen (B), die von einer Produktionseinrichtung (1) produziert werden, umfassend:
a) das Auswählen (S1) von zu vermessenden Bauteilen (B) aus einer Vielzahl von Bauteilen (B), wobei die Auswahl gemäß mindestens einem Auswahlparameter (p) erfolgt, der eine Stichprobenhäufigkeit ist,
b) das Bestimmen (S3) mindestens eines Produktionsparameters (m), der eine Produktionsbedingung repräsentiert,
c) das Anpassen (S4) der Stichprobenhäufigkeit in Abhängigkeit des Produktionsparameters (m) oder einer Änderung des Produktionsparameters (m),
wobei sich die Stichprobenhäufigkeit verringert, wenn sich ein oder mehrere Produktionsparameter (m) nicht oder nicht mehr als ein vorbestimmtes Maß ändert.

2. Verfahren nach Anspruch 1, **dadurch gekennzeichnet, dass** ein weiterer Auswahlparameter (p) mindestens eine Ordnungszahl in einer Reihenfolge von produzierten Bauteilen (B) ist.

3. Verfahren zur Vermessung von Bauteilen (B), die von einer Produktionseinrichtung (1) produziert werden, umfassend:
a) das Auswählen (S1) von zu vermessenden Bauteilen (B) aus einer Vielzahl von Bauteilen (B), wobei die Auswahl gemäß mindestens einem Auswahlparameter (p) erfolgt,
b) das Bestimmen (S3) mindestens eines Produktionsparameters (m),
c) das Anpassen (S4) des mindestens einen Auswahlparameters (p) in Abhängigkeit des Produktionsparameters (m) oder einer Änderung des Produktionsparameters (m),
wobei nach dieser rein produktionsparameterbedingten Anpassung des mindestens einen Auswahlparameters (p) gemäß den Schritten a) bis c)
e) eine Auswahl (S1) von zu vermessenden Bauteilen (B) aus einer vorbestimmten Anzahl von Bauteilen (B) erfolgt, wobei die Auswahl entsprechend dem produktionsparameterbedingt angepassten Auswahlparameter (p) erfolgt,
f) ein Erzeugen (S2a) von bauteilspezifischen Messdaten (MD) durch die Vermessung der gemäß Schritt e) ausgewählten Bauteile (B) mit einer Koordinatenmesseinrichtung (2) und das Analysieren (S2b) der Messdaten (MD) erfolgt und
g) ein erneutes, rein ergebnisbedingtes Anpassen (S4) des mindestens einen Auswahlparameters (p) in Abhängigkeit des Ergebnisses (r) der Auswertung gemäß Schritt f) erfolgt.

4. Verfahren nach Anspruch 1 bis 3, **dadurch gekennzeichnet, dass** das Bestimmen mindestens eines Messparameters erfolgt, wobei das Anpassen des mindestens einen Auswahlparameters (p) in Abhängigkeit des Messparameters oder einer Änderung des Messparameters erfolgt.

5. Verfahren nach einem der vorangegangenen Ansprüche, **dadurch gekennzeichnet, dass** das Anpassen des mindestens einen Auswahlparameters (p) teil- oder vollautomatisiert erfolgt.

6. Verfahren nach Anspruch 5, **dadurch gekennzeichnet, dass** das Anpassen des Auswahlparameters (p) regelbasiert erfolgt.

7. Verfahren nach Anspruch 6, **dadurch gekennzeichnet, dass** Regeln durch maschinelles Lernen bestimmt werden.

8. Verfahren nach einem der vorangegangenen Ansprüche, **dadurch gekennzeichnet, dass** ein Produktionsparameter (m) eine Umgebungsbedingung, ein zur Produktion verwendetes Werkzeug (W), ein zur Produktion verwendetes Verfahren, eine Anzahl (n) der seit einem bestimmten Zeitpunkt (t0) produzierten Bauteile (B), eine Produktionszeitdauer (t) seit einem bestimmten Zeitpunkt (t0), eine Anzahl der seit einem bestimmten Zeitpunkt produzierten Chargen (Cn, Cn+1) oder eine Schichtgruppe (S) ist oder diese(s) repräsentiert und/oder ein Messparameter ein zur Vermessung verwendeter Sensor ist oder diesen repräsentiert.

9. Verfahren nach einem der Ansprüche 3 bis 8, **dadurch gekennzeichnet, dass** der Auswahlparameter (p) eine Stichprobenhäufigkeit ist.

10. Verfahren nach einem der vorangegangenen Ansprüche, **dadurch gekennzeichnet, dass** der mindestens eine Auswahlparameter (p) mindestens eine Ordnungszahl in einer Reihenfolge von produzierten Bauteilen (B) ist und/oder dass die Auswahl von zu vermessenden Bauteilen (B) aus einer Charge (Cn) von Bauteilen (B) erfolgt, wobei die Auswahl von zu vermessenden Bauteilen (B) gemäß dem angepassten Auswahlparameter (p) aus einer weiteren Charge (Cn+1) von Bauteilen (B) erfolgt und/oder dass durch das Auswerten (S2b) für mehrere oder jedes Bauteil (B) der ausgewählten Bauteile (B) mindestens ein Qualitätsmaß bestimmt wird, wobei das Anpassen (S4) des mindestens einen Auswahlparameters (p) in Abhängigkeit des Qualitätsmaßes oder einer Änderung des Qualitätsmaßes erfolgt und/oder dass durch das Auswerten (S2b) für mehrere oder jedes Bauteil (B) der ausgewählten Bauteile (B) mindestens eine bauteilspezifische Eigenschaft bestimmt wird, wobei
a) eine Anpassung erfolgt, wenn die bauteilspezifische Eigenschaft bei einer vorbestimmten Anzahl der vermessenen Bauteile (B) mehr oder weniger als ein vorbestimmtes Maß von einem Sollwert abweicht oder wenn sich die bauteilspezifische Eigenschaft um mehr oder weniger als ein vorbestimmtes Maß verändert oder
b) in Abhängigkeit der bauteilspezifischen Eigenschaften mindestens eine resultierende Eigenschaft bestimmt wird, wobei eine Anpassung erfolgt, wenn die resultierende Eigenschaft mehr oder weniger als ein vorbestimmtes Maß von einem Sollwert abweicht oder wenn sich die resultierende Eigenschaft um mehr oder weniger als ein vorbestimmtes Maß verändert
und/oder dass nach der Bestimmung des mindestens einen Produktionsparameters (m) der Auswahlparameter (p) auf einen Wert gesetzt wird, der dem Produktionsparameter (m) oder der Änderung des Produktionsparameters (m) zugeordnet ist oder der Auswahlparameter (p) verändert wird, wobei die Änderung dem Produktionsparameter (p) oder der Änderung des Produktionsparameters (p) zugeordnet ist.

11. Verfahren nach Anspruch 1 oder 2, **dadurch gekennzeichnet, dass** nach einer rein produktionsparameterbedingten Anpassung des mindestens einen Auswahlparameters (p)
a) eine Auswahl (S1) von zu vermessenden Bauteilen (B) aus einer vorbestimmten Anzahl von Bauteilen (B) erfolgt, wobei die Auswahl entsprechend dem produktionsparameterbedingt angepassten Auswahlparameter (p) erfolgt,
b) ein Erzeugen (S2a) von bauteilspezifischen Messdaten (MD) durch die Vermessung der ausgewählten Bauteile (B) mit einer Koordinatenmesseinrichtung (2) und das Analysieren (S2b) der Messdaten (MD) erfolgt und
c) ein erneutes, rein ergebnisbedingtes Anpassen (S4) des mindestens einen Auswahlparameters (p) in Abhängigkeit des Ergebnisses (r) der Auswertung erfolgt.

12. Programm, welches, wenn es auf oder durch einen Computer ausgeführt wird, den Computer und eine Koordinatenmesseinrichtung veranlasst, mindestens die Schritte eines Verfahrens zur Vermessung gemäß einem der Ansprüche 1, 2 oder einem der auf diese Ansprüche 1 bis 2 zurückbezogenen Ansprüche 4 bis 11 durchzuführen.

13. Programm, welches, wenn es auf oder durch einen Computer ausgeführt wird, den Computer und eine Koordinatenmesseinrichtung veranlasst, mindestens die Schritte eines Verfahrens zur Vermessung gemäß dem Anspruch 3 oder einem der auf diesen Anspruch 3 zurückbezogenen Ansprüche 4 bis 10 durchzuführen.

14. System zur Vermessung von Bauteilen (B), die von einer Produktionseinrichtung (1) produziert werden, umfassend mindestens eine Koordinatenmesseinrichtung (2) und mindestens eine Auswerte- und Steuereinrichtung, wobei das System (4) konfiguriert ist, um die Schritte eines Verfahrens zur Vermessung gemäß einem der Ansprüche 1, 2 oder einem der auf diese Ansprüche 1 bis 2 zurückbezogenen Ansprüche 4 bis 11 durchzuführen.

15. System zur Vermessung von Bauteilen (B), die von einer Produktionseinrichtung (1) produziert werden, umfassend mindestens eine Koordinatenmesseinrichtung (2) und mindestens eine Auswerte- und Steuereinrichtung, wobei das System (4) konfiguriert ist, um die Schritte eines Verfahrens zur Vermessung gemäß dem Anspruch 3 oder einem der auf diesen Ansprüche 3 zurückbezogenen Ansprüche 4 bis 10 durchzuführen.

## Claims

1. Method for measuring components (B) produced by a production device (1), comprising:
a) the selection (S1) of components (B) to be measured from a multiplicity of components (B), the selection being made according to at least one selection parameter (p), which is a sampling frequency,
b) the determination (S3) of at least one production parameter (m), which represents a production condition,
c) the adaptation (S4) of the sampling frequency on the basis of the production parameter (m) or a change in the production parameter (m),
wherein the sampling frequency reduces if one or more production parameters (m) do not change or do not change more than a predetermined measure.

2. Method according to Claim 1, **characterized in that** a further selection parameter (p) is at least one ordinal number in a sequence of produced components (B).

3. Method for measuring components (B) produced by a production device (1), comprising:
a) the selection (S1) of components (B) to be measured from a multiplicity of components (B), the selection being made according to at least one selection parameter (p),
b) the determination (S3) of at least one production parameter (m),
c) the adaptation (S4) of the at least one selection parameter (p) on the basis of the production parameter (m) or a change in the production parameter (m),
wherein this purely production parameter-related adaptation of the at least one selection parameter (p) according to steps a) to c) is followed by
e) a selection (S1) of components (B) to be measured from a predetermined number of components (B), the selection being made in accordance with the selection parameter (p) which has been adapted in production parameter-related fashion,
f) a creation (S2a) of component-specific measurement data (MD) by measuring the components (B) selected in accordance with step e) using a coordinate measuring machine (2) and the analysis (S2b) of the measurement data (MD) and
g) a renewed, purely result-related adaptation (S4) of the at least one selection parameter (p) on the basis of the result (r) of the evaluation in accordance with step f).

4. Method according to Claim 1 to 3, **characterized in that** at least one measurement parameter is determined, the at least one selection parameter (p) being adapted on the basis of the measurement parameter or a change in the measurement parameter.

5. Method according to any of the preceding claims, **characterized in that** the at least one selection parameter (p) is adapted in partly or fully automated fashion.

6. Method according to Claim 5, **characterized in that** the selection parameter (p) is adapted on the basis of rules.

7. Method according to Claim 6, **characterized in that** rules are determined by machine learning.

8. Method according to any of the preceding claims, **characterized in that** a production parameter (m) is or represents an ambient condition, a tool (W) used for the production, a method used for the production, a number (n) of the components (B) produced since a certain time (t0), a production time period (t) since a certain time (t0), a number of the batches (Cn, Cn+1) produced since a certain time or a shift group (S) and/or a measurement parameter is or represents a sensor used for the measurement.

9. Method according to any of Claims 3 to 8, **characterized in that** the selection parameter (p) is a sampling frequency.

10. Method according to any of the preceding claims, **characterized in that** the at least one selection parameter (p) is at least one ordinal number in a sequence of produced components (B) and/or **in that** components (B) to be measured are selected from a batch (Cn) of components (B), with components (B) to be measured being selected from a further batch (Cn+1) of components (B) in accordance with the adapted selection parameter (p), and/or **in that** at least one quality measure is determined for a plurality or each component (B) of the selected components (B) by way of the evaluation (S2b), with the adaptation (S4) of the at least one selection parameter (p) being implemented on the basis of the quality measure or change in the quality measure, and/or **in that** at least one component-specific property is determined for a plurality or each component (B) of the selected components (B) by way of the evaluation (S2b), wherein
a) an adaptation is implemented if the component-specific property deviates more or less than a predetermined measure from a target value for a predetermined number of the measured components (B) or if the component-specific property changes by more or less than a predetermined measure, or
b) at least one resultant property is determined on the basis of the component-specific properties, an adaptation being implemented if the resultant property deviates more or less than a predetermined measure from a target value or if the resultant property changes by more or less than a predetermined measure
and/or **in that** post determination of the at least one production parameter (m), the selection parameter (p) is set to a value assigned to the production parameter (m) or to the change in the production parameter (m) or the selection parameter (p) is changed, with the change being assigned to the production parameter (p) or the change in the production parameter (p).

11. Method according to Claim 1 or 2, **characterized in that** a purely production parameter-related adaptation of the at least one selection parameter (p) is followed by
a) a selection (S1) of components (B) to be measured from a predetermined number of components (B), the selection being made in accordance with the selection parameter (p) which has been adapted in production parameter-related fashion,
b) a creation (S2a) of component-specific measurement data (MD) by measuring the selected components (B) using a coordinate measuring machine (2) and the analysis (S2b) of the measurement data (MD) and
c) a renewed, purely result-related adaptation (S4) of the at least one selection parameter (p) on the basis of the result (r) of the evaluation.

12. Program which, when executed on or by a computer, prompts the computer and a coordinate measuring machine to carry out at least the steps of a measurement method according to either of Claims 1 and 2 or according to any of Claims 4 to 11 when referring back to Claims 1 and 2.

13. Program which, when executed on or by a computer, prompts the computer and a coordinate measuring machine to carry out at least the steps of a measurement method according to Claim 3 or according to any of Claims 4 to 10 when referring back to Claim 3.

14. System for measuring components (P) produced by a production device (1), comprising at least one coordinate measuring machine (2) and at least one evaluation and control device, wherein the system (4) is configured to carry out the steps of a measurement method according to either of Claims 1 and 2 or according to any of Claims 4 to 11 when referring back to Claims 1 and 2.

15. System for measuring components (P) produced by a production device (1), comprising at least one coordinate measuring machine (2) and at least one evaluation and control device, wherein the system (4) is configured to carry out the steps of a measurement method according to Claim 3 or according to any of Claims 4 to 10 when referring back to Claim 3.

## Revendications

1. Procédé permettant de mesurer des composants (B) qui sont produits par un dispositif de production (1), comprenant les étapes consistant à :
a) sélectionner (S1) des composants (B) à mesurer parmi une pluralité de composants (B), la sélection étant effectuée selon au moins un paramètre de sélection (p) qui est une fréquence d'échantillonnage,
b) déterminer (S3) au moins un paramètre de production (m) qui représente une condition de production,
c) adapter (S4) la fréquence d'échantillonnage en fonction du paramètre de production (m) ou d'une variation du paramètre de production (m),
dans lequel la fréquence d'échantillonnage diminue si un ou plusieurs paramètres de production (m) ne varie(nt) pas ou ne varie(nt) de pas plus qu'une mesure prédéterminée.

2. Procédé selon la revendication 1, **caractérisé en ce qu'**un paramètre de sélection (p) supplémentaire est au moins un nombre ordinal dans un ordre de composants (B) produits.

3. Procédé permettant de mesurer des composants (B) qui sont produits par un dispositif de production (1), comprenant les étapes consistant à :
a) sélectionner (S1) des composants (B) à mesurer parmi une pluralité de composants (B), la sélection étant effectuée selon au moins un paramètre de sélection (p),
b) déterminer (S3) au moins un paramètre de production (m),
c) adapter (S4) ledit au moins un paramètre de sélection (p) en fonction du paramètre de production (m) ou d'une variation du paramètre de production (m),
dans lequel après cette adaptation uniquement en raison au paramètre de production dudit au moins un paramètre de sélection (p) selon les étapes a) à c)
e) une sélection (S1) de composants (B) à mesurer parmi un nombre prédéterminé de composants (B) est effectuée, la sélection étant effectuée selon le paramètre de sélection (p) adapté en raison du paramètre de production,
f) une génération (S2a) de données de mesure (MD) spécifiques à un composant est effectuée par la mesure des composants (B) sélectionnés selon l'étape e) par un dispositif de mesure de coordonnées (2), et l'analyse (S2b) des données de mesure (MD) est effectuée, et
g) une nouvelle adaptation (S4) uniquement en raison du résultat dudit au moins un paramètre de sélection (p) est effectuée en fonction du résultat (r) de l'évaluation selon l'étape f).

4. Procédé selon les revendications 1 à 3, **caractérisé en ce que** la détermination d'au moins un paramètre de mesure est effectuée, dans lequel l'adaptation dudit au moins un paramètre de sélection (p) est effectuée en fonction du paramètre de mesure ou d'une variation du paramètre de mesure.

5. Procédé selon l'une quelconque des revendications précédentes, **caractérisé en ce que** l'adaptation dudit au moins un paramètre de sélection (p) est effectuée de manière partiellement ou entièrement automatisée.

6. Procédé selon la revendication 5, **caractérisé en ce que** l'adaptation du paramètre de sélection (p) est effectuée sur la base de règles.

7. Procédé selon la revendication 6, **caractérisé en ce que** des règles sont déterminées par apprentissage machine.

8. Procédé selon l'une quelconque des revendications précédentes, **caractérisé en ce qu'**un paramètre de production (m) est ou représente une condition d'environnement, un outil (W) utilisé pour la production, un procédé utilisé pour la production, un nombre (n) des composants (B) produits depuis un temps déterminé (t0), une durée de production (t) depuis un temps déterminé (t0), un nombre des lots (Cn, Cn+1) produits depuis un temps déterminé ou une équipe (S), et/ou un paramètre de mesure est ou représente un capteur utilisé pour la mesure.

9. Procédé selon l'une quelconque des revendications 3 à 8, **caractérisé en ce que** le paramètre de sélection (p) est une fréquence d'échantillonnage.

10. Procédé selon l'une quelconque des revendications précédentes, **caractérisé en ce que** ledit au moins un paramètre de sélection (p) est au moins un nombre ordinal dans un ordre de composants (B) produits, et/ou **en ce que** la sélection de composants (B) à mesurer est effectuée dans un lot (Cn) de composants (B), dans lequel la sélection de composants (B) à mesurer est effectuée selon le paramètre de sélection (p) adaptée dans un lot supplémentaire (Cn+1) de composants (B), et/ou **en ce que** l'évaluation (S2b) pour plusieurs ou chaque composant(s) (B) des composants (B) sélectionnés permet de déterminer au moins une mesure de qualité, dans lequel l'adaptation (S4) dudit au moins un paramètre de sélection (p) est effectuée en fonction de la mesure de qualité ou d'une variation de la mesure de qualité, et/ou **en ce que** l'évaluation (S2b) pour plusieurs ou chaque composant(s) (B) des composants (B) sélectionnés permet de déterminer au moins une propriété spécifique à un composant, dans lequel
a) une adaptation est effectuée si la propriété spécifique à un composant dévie pour un nombre prédéterminé des composants (B) mesurés de plus ou moins d'une mesure prédéterminée par rapport à une valeur théorique, ou si la propriété spécifique à un composant varie de plus ou moins d'une mesure prédéterminée, ou
b) au moins une propriété résultante est déterminée en fonction des propriétés spécifiques à un composant, dans lequel une adaptation est effectuée si la propriété résultante dévie de plus ou moins d'une mesure prédéterminée par rapport à une valeur théorique ou si la propriété résultante varie de plus ou moins d'une mesure prédéterminée,
et/ou **en ce qu'**après la détermination dudit au moins un paramètre de production (m), le paramètre de sélection (p) est mis sur une valeur qui est associée au paramètre de production (m) ou à la variation du paramètre de production (m), ou le paramètre de sélection (p) est modifié, dans lequel la modification est associée au paramètre de production (p) ou à la variation du paramètre de production (p).

11. Procédé selon la revendication 1 ou 2, **caractérisé en ce qu'**après une adaptation uniquement en raison au paramètre de production dudit au moins un paramètre de sélection (p)
a) une sélection (S1) de composants (B) à mesurer parmi un nombre prédéterminé de composants (B) est effectuée, la sélection étant effectuée selon le paramètre de sélection (p) adapté en fonction du paramètre de production,
b) une génération (S2a) de données de mesure (MD) spécifiques à un composant est effectuée par la mesure des composants (B) sélectionnés par un dispositif de mesure de coordonnées (2), et l'analyse (S2b) des données de mesure (MD) est effectuée, et
c) une nouvelle adaptation (S4) uniquement en raison du résultat dudit au moins un paramètre de sélection (p) est effectuée en fonction du résultat (r) de l'évaluation.

12. Programme qui, lorsqu'il est exécuté sur ou par un ordinateur, fait que l'ordinateur et un dispositif de mesure de coordonnées exécutent au moins les étapes d'un procédé de mesure selon l'une quelconque des revendications 1, 2 ou l'une des revendications 4 à 11 dépendant de ces revendications 1 à 2.

13. Programme qui, lorsqu'il est exécuté sur ou par un ordinateur, fait que l'ordinateur et un dispositif de mesure de coordonnées exécutent au moins les étapes d'un procédé de mesure selon la revendication 3 ou l'une des revendications 4 à 10 dépendant de cette revendication 3.

14. Système permettant de mesurer des composants (B) qui sont produits par un dispositif de production (1), comprenant au moins un dispositif de mesure de coordonnées (2) et au moins un dispositif d'évaluation et de commande, dans lequel le système (4) est configuré pour exécuter les étapes d'un procédé de mesure selon l'une quelconque des revendications 1, 2 ou l'une des revendications 4 à 11 dépendant de ces revendications 1 à 2.

15. Système permettant de mesurer des composants (B) qui sont produits par un dispositif de production (1), comprenant au moins un dispositif de mesure de coordonnées (2) et au moins un dispositif d'évaluation et de commande, dans lequel le système (4) est configuré pour exécuter les étapes d'un procédé de mesure selon la revendication 3 ou l'une des revendications 4 à 10 dépendant de cette revendication 3.
